(19) **Europäisches Patentamt European Patent Office Office européen des brevets**

(11) **EP 4 357 738 B1**

(12) **EUROPEAN PATENT SPECIFICATION**

(45) Date of publication and mention of the grant of the patent:
**15.01.2025 Bulletin 2025/03**

(51) International Patent Classification (IPC):
*G01H 3/00* (2006.01)    *G10K 9/00* (2006.01)
*G10K 9/22* (2006.01)

(21) Application number: **23192946.4**

(52) Cooperative Patent Classification (CPC):
**G01H 3/00; G10K 9/00; G10K 9/22**

(22) Date of filing: **23.08.2023**

(54) **DIRECTIONAL SENSOR FOR INFRASOUND MEASUREMENT, AND CORRESPONDING INFRASOUND EMITTER**

RICHTUNGSSENSOR FÜR MESSUNG VON INFRASCHALL, UND KORRESPONDIERENDE SENDER

CAPTEUR DIRECTIONNEL POUR MESURE INFRASONORE, ET ÉMETTEUR INFRASONORE CORRESPONDANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **18.10.2022 IT 202200021414**

(43) Date of publication of application:
**24.04.2024 Bulletin 2024/17**

(73) Proprietor: **Advanced Scientific Sensors and Systems S.r.l.**
**84081 Baronissi (SA) (IT)**

(72) Inventors:
- **BARONE, Fabrizio**
  **Baronissi (SA) (IT)**
- **ROCCO, Romano**
  **Baronissi (SA) (IT)**

(74) Representative: **Perronace, Andrea et al**
**Jacobacci & Partners S.p.A.**
**Via Tomacelli, 146**
**00186 Roma (IT)**

(56) References cited:
EP-A2- 3 136 129      WO-A1-2021/051951
US-A- 4 387 451       US-A1- 2011 297 476
US-A1- 2014 036 637

- JIANGFENG LIU ET AL: "Near-shore ocean wave measurement using a very low frequency folded pendulum", MEASUREMENT SCIENCE AND TECHNOLOGY, IOP, BRISTOL, GB, vol. 9, no. 10, 1 October 1998 (1998-10-01), pages 1772 - 1776, XP020064629, ISSN: 0957-0233, DOI: 10.1088/ 0957-0233/9/10/018

**Description**

The present invention relates to a mechanical sensor aimed at measuring low-frequency broadband acoustic signals (infrasound) propagating in liquid and gaseous media for scientific, civil and industrial applications, and a complementary mechanical emitter (source) for acoustic signals emission in analogous band.

**Prior art**

It is well known that mechanical signals generated by natural or artificial events can propagate also at large distances in presence of a supporting medium (solid, liquid, gaseous) according to the well-known theory of waves propagation. A signal passing through a medium mechanically induces local temporal changes of its physical characteristics, that, measured and analyzed, can allow the determination not only of the physical and the geometric parameters of the event, such as for example the position and power of the source but, sometimes, also the generating causes.

Limiting ourselves in this introduction to solid media for descriptive simplicity, a typical example of wave propagation of signals generated by local events is represented by seismic waves generated by earthquakes. More in detail, the local ground displacement generated by an earthquake produces signals propagating in depth and/or on the surface as waves over great distances at the typical speed of the supporting medium through compressions and rarefactions. Therefore, a suitably positioned sensor arrays may allow the reconstruction of the signal and the localization of the generating phenomenon also at great distances.

A physical quantity measurable by sensors is the local displacement over the time of a generic point of the ground affected by the arrival of the seismic wave, regardless of the type of wave. For this purpose, several types of sensors can be used, including, for example, inertial seismometers. These sensors measure the absolute motion of the point to which they are integral (measuring point) with respect to the motion of an inertial mass, the basic element of the seismometer itself, implemented in classic inertial seismometers as mechanical oscillator.

Over the past ten years, a considerable boost has been given to the development of new mechanical architectures, which have led to the invention of a class of innovative mechanical oscillators, bringing back into use the class of inertial mechanical seismometers [1, 2, 3, 4, 5]. In fact, the identification of new mechanical architectures, the choice of innovative materials and the machining using the most advanced mechanical machining technologies currently allow the production of mechanical oscillators, even monolithic, with very high-quality low-frequency performances and mechanical noise limited only by thermal noise [6,7].

In the case, however, of signal propagation in non-solid media, such as liquid, gaseous and plasmas ones, the mechanical signal propagates with speed depending on the medium through compressions and rarefactions, which determine local pressure changes, that in most cases is the physical quantity used in measurement of the mechanical signal.

As far as, however, the signal propagation in solids, liquids, gases and plasmas is based on the same principle (pressure changes), in practice the measurement of mechanical signals in solid media largely differs from those in non-solid media.

In fact, in the case of propagation of mechanical waves in solids (e.g. seismic waves) the absolute motion of a fixed reference point, generated by the pressure change in the medium induced by the mechanical signal, is measured. For this purpose, a sensor (e.g. inertial seismometer), integral to the ground in this point, measures the relative displacement between the position of the fixed reference point and the position of the mechanic mass of its oscillator. This measurement provides the absolute motion of the fixed reference point for frequencies higher than the resonance frequency of the mechanical oscillator itself [4, 5, 6], which coupled with the knowledge of the type of solid medium allows to trace the pressures generating this signal. In analogy with acoustics, these sensors are also called geophones in the field of geophysics.

In the case of the propagation of mechanical waves in liquids, gases and plasmas, as for example in classical acoustics, the pressure changes should be measured at a fixed point, but since the sensor cannot be integral to the fluid medium (e.g. air), it is generally integral a different point (e.g. ground). This type of measurement configuration, obliged by the not solid typology of the medium, allows the measurement of pressure change, carried out at the point where the transducer is present, but relative to the point to which the sensor is physically integral. It is therefore evident that in the specific case of a sensor integral to the ground, the seismic signal becomes part of the measurement itself, assuming in this case the role of noise. Therefore, to obtain a correct measurement of the mechanical signal in the fluid medium, this noise must be attenuated, canceled or, better, independently measured and analytically subtracted to maximize the signal/noise ratio of the measure. Continuing the analogy with acoustics, this sensor takes the name of hydrophone in liquids (e.g. water) and microphone in gases (e.g. air).

Remaining, for simplicity of explanation, in the framework of a gaseous medium such as air, although all that presented and discussed here can easily be extended to the case of liquids, the pressure waves mentioned above are called acoustic waves and they are generally classified in literature into three frequency bands, the definition of which is related to the sensitivity of the human ear: infrasound (< 20 Hz), sound (20 Hz - 20 kHz) and ultrasound (> 20 kHz).

The study of acoustic signals, and in particular the infrasound band, exhibits many important aspects for understanding and modeling physical phenomena. But, actually, the sensors for infrasound band measurement, although currently undergoing strong development, often are not able to allow an effective measurement in the low and very low frequency region both for sensitivity and, on the basis of what has been described previously, also for their signal/noise ratio.

In order to demonstrate the importance and the technological need of measuring instruments that go beyond the current limitations, a number of fields are listed in which the improvement of the instrumentation can bring considerable benefits, including those aimed at the protection of environment and population (e.g. risk prevention). In particular, the study of infrasound can be globally divided into two different types of signals:

a. natural signals, generated by natural physical phenomena, including those generated by animals and plants and those used and useful for monitoring and research;
b. artificial signals, generated by human activity including those generated by man-made machines.

As regards the natural infrasound sources, for which it may also be convenient to carry out continuous monitoring also for the purpose of a better understanding of the phenomena, the following can be cited as example:

1. Meteorology: monitoring of meteorological conditions, study of sea and ocean waves, study and forecast of hurricanes, tornadoes, avalanches.
2. Geophysics: study of earthquakes; monitoring of volcanoes, fireballs, waterfalls, icebergs (birth), auroras, meteors, lightning, thunder;
3. Medicine: Mechanics of the heart (ballistocardiography and seismocardiography).
4. Animal communication: monitoring the communication between whales, elephants, hippos, rhinos, giraffes, peacocks, alligators.

On the other hand, as regards artificial infrasound sources, for which it may be convenient to carry out continuous monitoring aimed at a better understanding of the phenomena, but also and above all to reduce the physical and environmental risks for the population such as those related to noise pollution, we can mention for example:

1. Explosions: sonic booms and explosions (both chemical and nuclear);
2. Machines: diesel engines, wind turbines and mechanical transducers;
3. Oil exploration: tracing rock and oil formations;
4. Communication: data transmission over large distances in liquid and gaseous media.

As far as the existing instrumentation is concerned, and limiting itself for simplicity to the gaseous medium (since the extension to the other mediums is direct), a sensor (microphone) can be defined in a schematic and modular way, divided into common components for functionality, even if often made according to very different technologies, which contribute to determine its quality and characteristics in terms of bandwidth and sensitivity, as well as directivity and applicability to specific measurement conditions.

In fact, a microphone is a device - a transducer - which converts pressure changes propagating as pressure waves into an electrical signal.

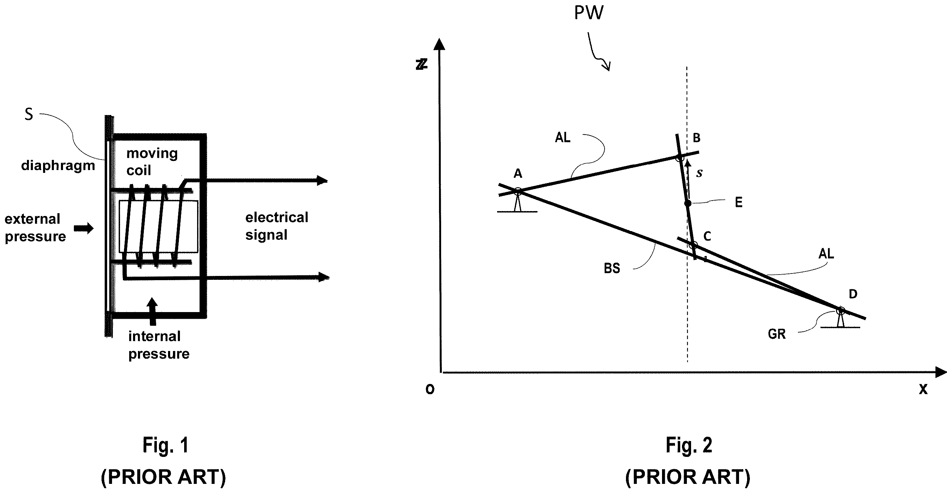

Schematically, a microphone consists of a sensitive mechanical element which converts the pressure changes in the medium into mechanical movement (usually a diaphragm), a transducer which converts the mechanical movement into an electrical signal, a container which has different functions depending on the type of microphone and often an input signal filtering system (windscreen) (Fig. 1).

Going into detail, in the microphone there is an element often known as a capsule, which contains the element (diaphragm) properly sensitive to vibrations. This sensitive element is the most important component as it determines the microphone sensitivity, bandwidth and directivity, even if the latter can be optimized with suitable mechanical solutions.

Basically, the diaphragm is a mechanical membrane oscillator generally made of a thin steel plate which vibrates in presence of external pressure variations. The coefficient of elasticity and the mass of this membrane determine the mechanical resonance frequency of the system, in a completely analogous way to what happens for a classic mass-spring mechanical oscillator, effectively defining sensitivity, measurement band (in commercial microphones the band measurement rarely extends below 1 Hz) and directivity of the microphone itself. In recent decades, considerable technological developments have been made aimed, however, more at the miniaturization of microphones than at extending the measurement band in the infrasound region. For example, MEMS-based microphones [8], variants of the classic condenser microphone, are characterized by the fact that the pressure-sensitive diaphragm is etched directly into a silicon wafer and usually accompanied by an integrated preamplifier. Although the high quality of the constructions (including the signal preamplification implemented on the same wafer on which the microphone is built) improves the signal-to-noise ratio, a widening of the measurement band in the low frequency region (infrasound) is difficult to predict for this type of microphone. In fact, the increasing miniaturization of the components produced with this technology does not let predict either effective structural improvements aimed at improving the directivity of the microphonic sensor itself or easy extensions of its measurement band in the infrasound region, where instead, an increase in the mass of the membrane coupled with a reduction of its coefficient of elasticity would be required.

Very low frequency sensors based on the Watt-linkage mechanism are also known [19,20] which are not structured to work as acoustic sensors.

Furthermore, multidimensional force sensors with a rod system are known [21] but are not suitable for use as acoustic sensors.

Underwater sound emitters are otherwise known [22], but they are not sufficiently accurate and therefore have limited applicability.

Therefore, in general, there is the need to develop new methodologies and techniques aimed at extending the measurement band in the infrasound region to carry out measurements in a frequency band, partially unexplored, that current sensors do not cover effectively and accurately.

### Purpose and object of the invention

The object of the present invention is to provide a method for measuring a low-frequency broadband external stress, generated, for example, by mechanical pressure waves propagating in liquids and gases for civil and industrial scientific applications, which in whole or in part solves the problems and overcome the drawbacks of the prior art, and of an emitter of external stresses, for example of pressure waves, which operates in the same band.

The object of the present invention is a method for measuring an external stress, as well as a mechanical sensor and emitter of mechanical pressure waves according to the attached claims.

### Detailed description of examples of embodiment of the invention

### List of figures

The invention will now be described for illustrative but non-limiting purposes, with particular reference to the drawings of the attached figures, in which:

- Fig. 1 shows a general and modular diagram of a classic dynamic microphone with its functional components, independently of the manufacturing technique.
- Fig. 2 shows the so-called Watt's Linkage, according to the prior art.

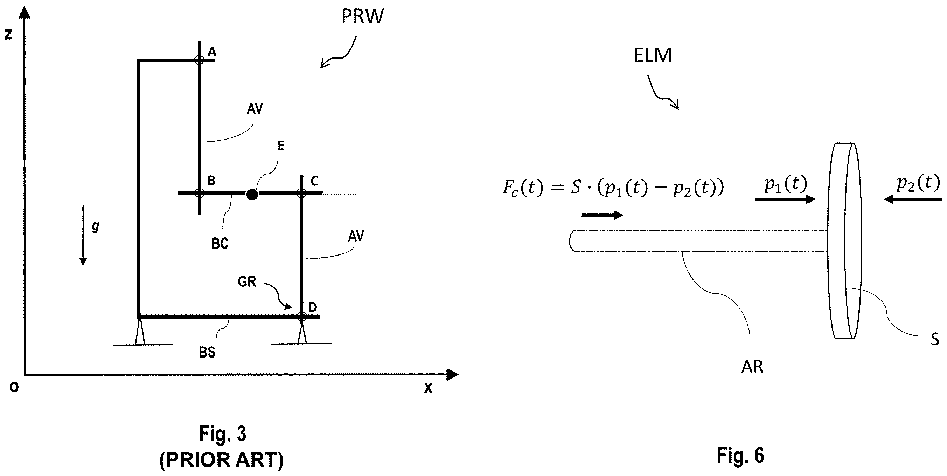

- Fig. 3 shows the so-called Folded Pendulum, a particular case of the configuration of Fig. 2, according to the prior art.

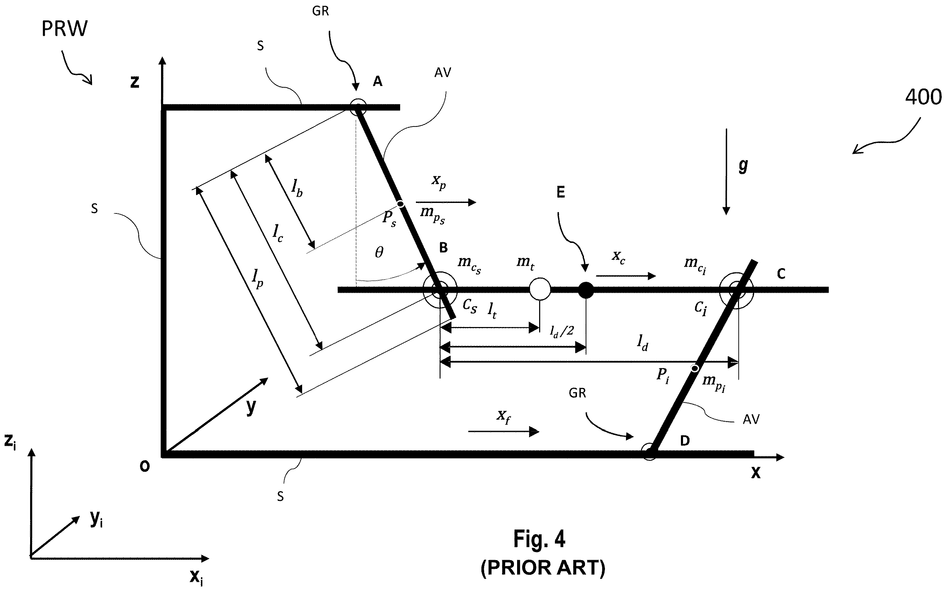

- Fig. 4 shows a model of Folded Pendulum positioned horizontally, according to the prior art [4, 5, 6].

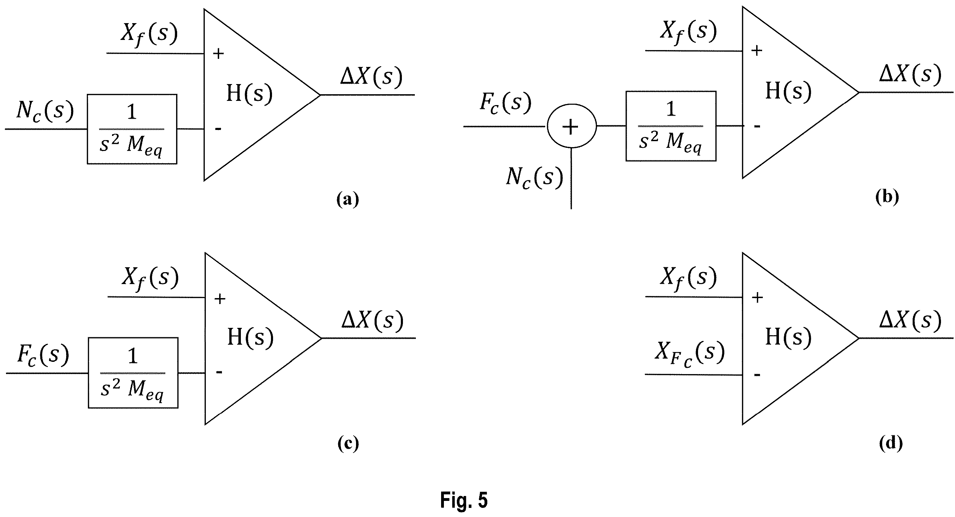

- Fig. 5 shows in a general way the functional reinterpretation of the Watt's Linkage scheme (and of the related Folded Pendulum) in the Laplace Transform domain, as a differential mechanical amplifier with a mechanical output signal equal to $\Delta X(s) = X_f(s) - X_c(s)$, according to the invention; the different interpretations of the model are reported for clarity: (a) classical model with measurement signal input, $X_f(s)$, and noise input, $N_c(s)$ (Equations 12 and 13); (b) model with measurement signal input, $X_f(s)$, and noise input, $N_c(s)$, with the introduction of the measurement input, $F_c(s)$, as modeled in Equation 16; (c) model with measurement signal input, $X_f(s)$ and $F_c(s)$, with negligible input noise, $N_c(s) \approx 0$, with introduction of the measurement input, $F_e(s)$, as modeled in Equations 18 and 19; (d) general equivalent model of differential mechanical amplifier with independent inputs $X_f(s)$ and $X_c(s)$ (Equation 18).
- Fig. 6 shows the principle diagram of the pressure transducer (in general of an external stress) consisting of a rigid plate with section S, to which one end of a rigid rod AR is connected. The other end of the rigid rod is connected, preferably rigidly and integrally, to the central rod $\overline{BC}$ of the Folded Pendulum (Watt's Linkage) at any point inside or outside the two rotation joints B and C. The figure highlights the resulting force, $F_c(t) = S \cdot (p_1(t) - p_2(t))$, generated by the pressure difference between the two faces and proportional to the surface S of the plate itself.

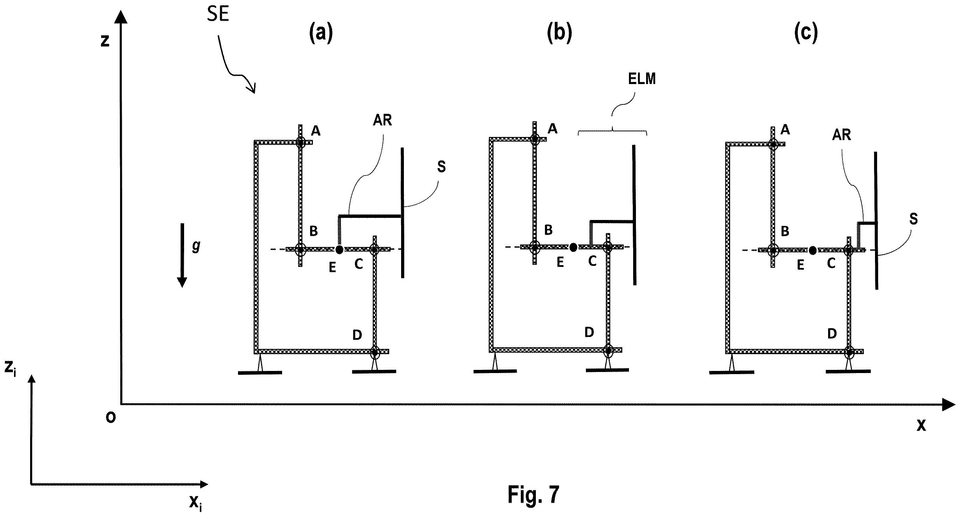

- Fig. 7 schematically shows the different connection possibilities in principle of the pressure transducer consisting of the rigid plate and the rigid rod AR to the central rod $\overline{BC}$ of the Folded Pendulum (Watt's Linkage): a) in the geometric center E of the central shaft $\overline{BC}$; b) within the segment delimited by the rotation joints B and C; c) outside the segment delimited by the rotation joints B and C. In the figure, the transducer is positioned on the side of the inverted pendulum of the Folded Pendulum, but it should be understood that this transducer can be positioned symmetrically (on the side of the simple pendulum).

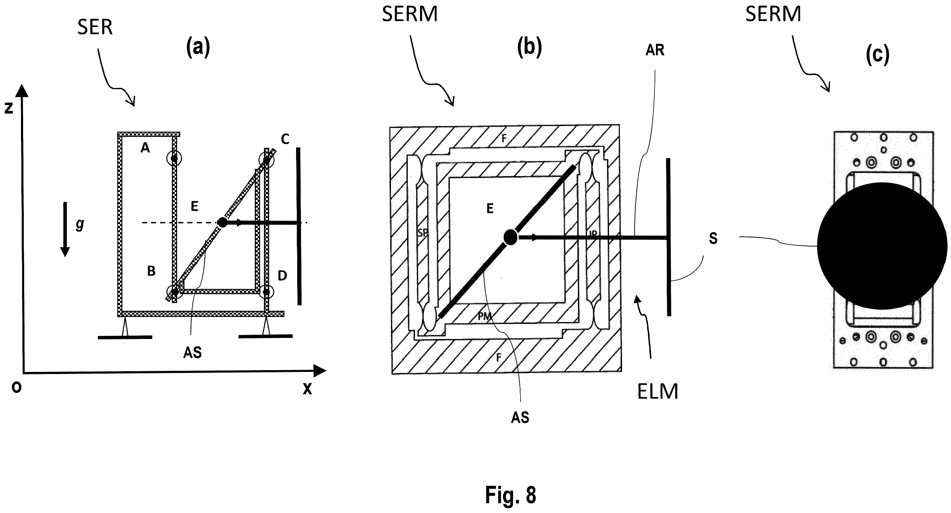

- Fig. 8 shows a principle diagram of the connection of the pressure transducer to a classic monolithic Folded Pendulum: a) principle diagram of the Transducer-Folded Pendulum connection; b) scheme of monolithic Folded Pendulum used as a prototype for the experimental tests relating to the invention, with schematization of the structure of the connecting rod of the stress Transducer to the Folded Pendulum for an optimal positioning of its end in the virtual center of the central rod, *E;* c) monolithic Folded Pendulum model with highlighted pressure transduction plate for its application as a microphone.

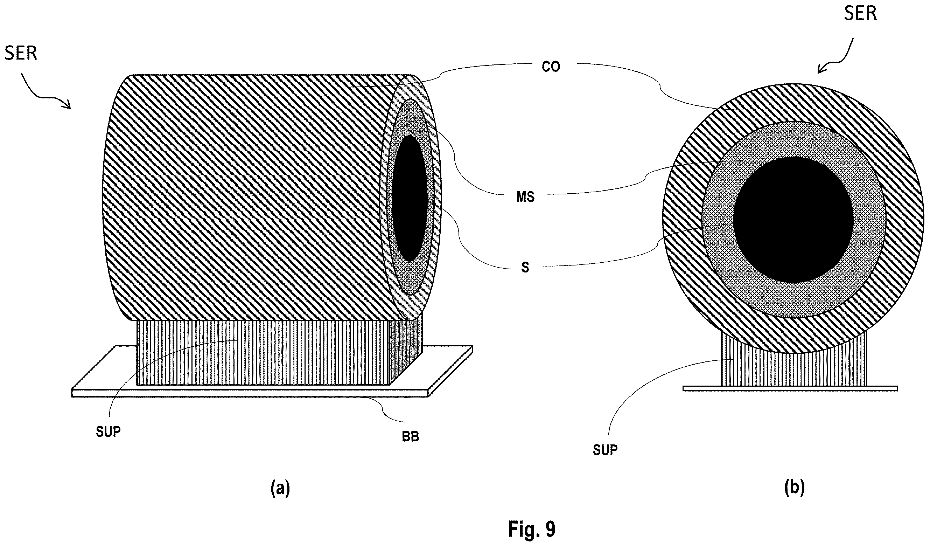

- Fig. 9 shows a scheme of a possible external structure aimed at maintaining a constant pressure inside an embodiment of the microphone of the invention in order to measure the changes of the external pressure with respect to the internal one. This structure can also be made in such a way as to create a vacuum inside. The MS thin membrane is such as to guarantee the constancy of the pressure inside the microphone but at the same time not to influence the mechanical performance of the Folded Pendulum oscillator with its (very low) elastic constant. Note: the Folded Pendulum is positioned inside the CO cylinder, integral with the SUP support and connected only to the rigid plate BB.

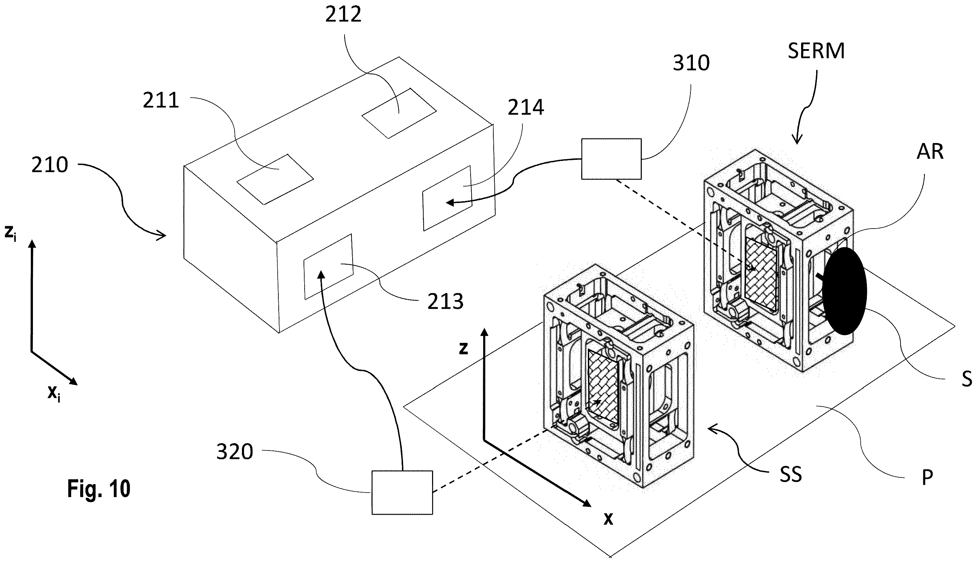

- Fig. 10 schematizes a dual differential system created with the aid of a data processor for processing the data produced by the two systems (seismometer and microphone) aimed at the complete decoupling of the displacement signals (seismic signal) from the pressure signals (acoustic). In the figure, the seismometer is to be considered preferably placed in an airtight container, insensitive to external pressure variations, as already widely carried out in its classic use in geophysical applications.

It is specified here that elements of different embodiments can be combined together to provide further embodiments without limits respecting the technical concept of the invention, as the average person skilled in the field understands without problems from what has been described.

The present description also refers to the prior art for its implementation, with regard to the not described characteristics of detail, such as for example minor elements usually used in the prior art in solutions of the same type.

When a list of elements or characteristics is listed in this description it is meant that the embodiment according to the invention "comprises" or alternatively "is composed of" such elements.

Two or more of the parts (elements, devices, systems) described according to the invention can be freely associated and considered as a kit of parts according to the invention.

## Embodiments

An optimal solution, which solves the problems which limit the realization of high-quality low frequency microphones, is, according to the invention, that of replacing the mechanical oscillator (diaphragm, capsule, etc.) with a highly directive mechanical oscillator characterized by a very low resonance frequency, forced by pressure variations (signals) through a mechanical system aimed at optimizing the coupling with the external pressure signal.

The invention described here introduces, in fact, a new type of microphone, based on a technologically innovative mechanism, such as that based on the Watt's Linkage [9], a kinematic mechanism which has undergone various developments and applications over the last few years, among which there is its Folded Pendulum version [10]. This new vision and structure of a microphone sensitive to infrasound allows, as we will see in the following description, the theoretical and experimental resolution of most of the problems that have prevented the realization of high-quality microphones in terms of sensitivity and directivity in the low frequency region (bandwidth characterized by frequency < 0.1 Hz),

In fact, the very slow progress of infrasound sensors (both in the case of liquid media and in the case of gaseous media and plasmas) is mainly due to the impossibility of realizing effective inertial masses in this frequency band unless assuming large structures. Conversely, studies and research aimed at identifying innovative mechanical structures have shown that it is possible to create "one-dimensional" inertial masses at low and very low frequencies, even with much more compact attenuation systems, using more complex architectures than the simple or inverse pendulum, such as the Watt's Linkage [9] and, more precisely, the Folded Pendulum [10].

The innovative architecture, introduced with the present invention, will make possible the realization of native directional one-dimensional microphones with high sensitivity, high directivity and wide band in the low frequency region, among which microphones for infrasound, and, in a complementary way, high quality sources of infrasound are included and cited by way of example only.

This last opportunity offered by the invention, that will be introduced in the discussion that follows, comes from a different interpretation, that is not as sensor but as actuator (i.e. not as a microphone, but as a loudspeaker) operating at low frequency (< 0.1 Hz), a problem scientifically and technologically open, certainly of interdisciplinary interest. The same mechanisms, previously described, can in fact be used with this different perspective, which leads directly to a possible use of the invention also as an infrasound source in the same band.

**Description and properties of Watt's Linkage**

Watt's Linkage is a mechanism invented by James Watt in 1784, also known in the literature as Parallel Linkage, characterized by relevant physical and geometric properties (Fig. 2) [4, 5, 6, 9, 10].

The original mechanism consists of three rods: a central rod ($\overline{BC}$) and two external rods of equal length ($\overline{AB}$ and $\overline{CD}$), the latter connected by means of rotation joints to both the central rod and to external fixed points (base), represented by the rod $\overline{AD}$, a configuration which also allows its classification as a kinematic mechanism [4, 5, 6, 9, 10].

The rotation joints, all lying on the same plane and characterized by rotation axes which are mutually parallel and perpendicular to the lying plane, constrain the whole mechanism to move on it. This leads to the definition of a fundamental geometric property of Watt's Linkage: the geometric center of the central rod is constrained to trace a lemniscate, which becomes a Bernoulli lemniscate if the lengths of the rods and of its base are chosen in such a way as to form a square cross [4, 5, 6, 9, 10].

In particular, however, under the assumption of small displacements of the central rod, this curve, also known as Watt's curve, can be approximated by a straight line (as described in the specifications of Watt's patent for the steam engine [9] ), an approximation that becomes more and more true the greater the length of the two external rods with respect to the central rod (Fig. 2).

Therefore, the motion of the geometric center of the central rod is a motion approximated by a straight line, therefore a one-dimensional motion, a fundamental characteristic of Watt's Linkage, which is used very effectively in its particular configuration, called Folded Pendulum, hypothesized for the first time by Ferguson in 1962 [10]. In fact, this configuration expresses the original idea of positioning the rods in such a way that the direction of the gravitational acceleration vector, g, is parallel to the longitudinal axes of the long rods (in general "arms") and perpendicular to that of the central rod (in general "arm") (configuration at rest), physically interpretable as a combination of a simple pendulum and of an inverted pendulum (long rods), connected to the central rod (inertial mass or "test mass" - not shown) and to an external load-bearing structure (frame) (Fig.3). The dynamic behavior of this particular configuration of the Watt's Linkage is equivalent to that of a horizontal mechanical oscillator with remarkable physical and geometrical properties [5, 6, 7, 9, 10], which has allowed the design of mechanical seismometers and accelerometers [1, 2, 3, 4, 5, 6, 11, 12, 13, 14], mechanical seismic attenuators [15, 16, 17] and innovative tiltmeters [3, 6, 18].

In summary, and with reference to Fig. 2, in order to effectively proceed with the description of the present invention, the most relevant properties of the Watt's Linkage (and, therefore, of the Folded Pendulum) are listed for the purposes of the present invention, already described and/or obtainable from the literature:

a) the motion of each of the rods that make up the Watt's Linkage PW (and, therefore, the Folded Pendulum PRW see Fig. 3) is constrained to take place on the fixed plane, *ABCD,* since the axes of the centers of rotation are by construction parallel between them and perpendicular to the plane identified by the ends of the rods;

b) the segment $\overline{AD}$ (base BS) can be of any shape, anyhow defined and positioned, provided that its endpoints *A* and *D* are fixed in a spatial coordinate system chosen as a reference, *xyz;*

c) for small displacements, the geometric center, *E* of the rod (arm) $\overline{BC}$ is constrained to move along a straight line (one-dimensional motion, in general Watt's curve), lying by construction in the fixed plane, *ABCD.* Therefore, any point of any rigid body rigidly constrained and integral with point *E* will be constrained to move one-dimensionally along a parallel rectilinear trajectory, with displacements identical to those performed by point *E;* a test mass is associated to the arm $\overline{BC}$, which can be schematized as positioned in the geometric center E;

d) it is always possible to measure the relative displacement of E with respect to any fixed point of the base $\overline{AD}$.

In Fig. 2 the long rods are indicated with AL. Obviously, in each point *A, B, C, D,* a system of joints, GR, is used.

Although the mechanical architecture of the Folded Pendulum appears very simple in principle, actually the analytical models developed for its description are very complex, so that numerical techniques based on finite element analysis (FEA) are generally preferred for its description. On the other hand, simplified analytical models, such as the Extended Folded Pendulum Model (EFPM) [6], provide a global and synthetic but effective and reliable view of the mechanical performance and dynamic behavior of a Folded Pendulum generally oriented in space, considering pendulums and central mass as two-dimensional bars and rotational joints concentrated in single points.

In the following we will use this model for descriptive purpose only of the invention, but without any limitation in principle.

For the sole purpose of descriptive clarity of this invention, but without any limitation of principle, some key elements of the Extended Folded Pendulum Model applied to the description of a Folded Pendulum positioned horizontally are reported, with the aim of underlining some of the physical and geometric peculiarities of the folded pendulum useful for understanding the invention itself.

Fig. 4 shows the Folded Pendulum PRW positioned fixed in the *xz* reference system, the latter oriented with the *z* axis parallel to the gravitational acceleration vector, g, and with the x axis perpendicular to it. The schematized Folded Pendulum (according to the EFPM model [6]) consists of two vertical rods (arms) AV of equal length, $l_p$, both connected at one end to a support S by means of two rotation joints GR, thus realizing a simple pendulum of mass $m_{p_s}$ and an inverted pendulum of mass $m_{p_i}$. The masses of the two pendulums are concentrated in their centers of mass, $P_s$ and $P_i$, respectively, at $l_b = l_p/2$. The other two sides of the rods are connected to a horizontal (central, BC) rod (arm), by means of two rotation joints ($C_s$ and $C_i$) positioned at a relative distance $l_d$. All four joints of rotation are characterized by rotation axes mutually parallel and perpendicular to the xz plane, so that the whole motion of the Folded Pendulum is constrained to take place in this *xz* plane. These joints can be elastic joints (in compression and/or in traction of any shape and material, even pre-flexed), however widely used in the monolithic configurations of Folded Pendulums [1, 2, 3, 4, 5, 6].

Then, defined the coordinate of the support as $x_f(t)$, imposing that the geometric center $F$ of the mechanical support, characterized by the coordinate $x_f(t)$, can be forced to move only in the direction parallel to the *x* axis of the reference system xz and defining the coordinate of $E$, geometric center of the central rod (of length $l_d$ and mass $m_c$), as $x_c(t)$ (being the difference $x_f(t) - x_c(t)$ measurable), it will then be possible, on the basis of the model obtained, to describe the different transfer functions of the Folded Pendulum in the domain of the Laplace Transform, in relation to the different possibilities of defining inputs and outputs, which can characterize the system and which will be fundamental in the description of the invention, object of the present application patent.

Clearly, here it is meant that the support can move with respect to a reference system which is not xz(y) but an inertial reference system $x_i y_i z_i$ or approximable to an inertial reference system.

In particular, the mass of the central rod of the Folded Pendulum, $m_c$, positioned at a distance, $l_m$, from the geometric center of rotation of the central rod, $C_s$, is modeled using two equivalent masses, $m_{c_s}$ and $m_{c_i}$ (distributing the mass of the central rod on the two arms, as described below), with the condition that

$$m_c = m_{c_s} + m_{c_i}. \tag{1}$$

It should also be taken into account that the resonance frequency of the Folded Pendulum can be changed by introducing an external mass (calibration mass), $m_t$, positioned at a distance, $l_t$, from the center of rotation of the central rod, $C_s$.

Therefore, it is convenient to define the global mass of the central rod, $m_g$, as

$$m_g = m_c + m_t \tag{2}$$

This mass can be split into two equivalent masses $m_{g_s}$ and $m_{g_i}$, located respectively at points $C_s$ and $C_i$ as,

$$m_{g_s} = m_{c_s} + m_{t_s} = m_c \left( 1 - \frac{l_m}{l_d} \right) + m_t \left( 1 - \frac{l_t}{l_d} \right) \tag{3}$$

$$m_{g_i} = m_{c_i} + m_{t_i} = m_c \left( \frac{l_m}{l_d} \right) + m_t \left( \frac{l_t}{l_d} \right) \tag{4}$$

so that the global mass can be redefined as

$$m_g = m_{g_s} + m_{g_i} \tag{5}$$

These equations show that any movement of the calibration mass, $\Delta l_t$, changes the values of the two equivalent masses, $m_{g_s}$ and $m_{g_i}$, by the amount

$$\Delta m_{g_s} = - \Delta m_{g_i} = - \frac{m_t}{l_d} \Delta l_t. \tag{6}$$

Therefore, for small deflection angles, $\theta$, the dynamic behaviour of the system is described by a second order resonant system (with two complex conjugate poles) with resonance frequency, $f_o$, equal to [4, 5, 6]

$$f_o = \frac{\omega_o}{2\pi} = \frac{1}{2\pi} \sqrt{\frac{K_{geq} + K_{eeq}}{M_{eq}}} = \frac{1}{2\pi} \sqrt{\frac{K_{eq}}{M_{eq}}} \tag{7}$$

where $K_{geq}$ is the equivalent gravitational elastic constant, linked to the geometric and inertial characteristics of the system, and $K_{e_{eq}}$ is the equivalent elastic constant dependent on the shape and on the mechanical characteristics of the suspension joints, defined, respectively, as

$$K_{g_{eq}} = \left[ (m_{p_s} - m_{p_i}) \frac{l_p}{2l_c} + (m_{g_s} - m_{g_i}) \right] \frac{g}{l_c} \qquad (8)$$

$$K_{e_{eq}} = \frac{k_\theta}{l_p^2} \qquad (9)$$

where $k_\theta$ is the global torsional elastic constant of the joints, sum of the elastic constants of all joints [4, 5, 6], while $M_{eq}$ is the equivalent mass, defined as

$$M_{eq} = (m_{p_s} + m_{p_i}) \frac{l_p^2}{3l_c^2} + \left( m_{g_s} + m_{g_i} \right) = (m_{p_s} + m_{p_i}) \frac{l_p^2}{3l_c^2} + m_g \qquad (10)$$

Equation 7 is the classic expression of the resonant frequency of a mass-spring oscillator with an equivalent elastic constant equal to $K_{eq}$ and mass $M_{eq}$. A unique peculiarity of the Folded Pendulum is the possibility of implementing mechanical oscillators with low resonance frequencies by compensating the equivalent elastic constant, $K_{e_{eq}}$, determined by the material and geometry of the joints themselves, with negative values of the global gravitational elastic constant, $K_{g_{eq}}$, obtainable by means of an appropriate combination of the physical and geometric parameters of the Folded Pendulum.

The simplified model, reported here, leads to the definition of two other relevant properties of the Watt's Linkage (and, therefore, of the Folded Pendulum), already described and/or obtainable from the literature [4, 5, 6]:

a) the global dynamic behavior of a Folded Pendulum is equivalent to that of a mass-spring system characterized by an equivalent elastic constant, $K_{eq}$ (Equations 7, 8, 9), and an equivalent mass $M_{eq}$ (Equation 10);
b) the motion of the mass-spring equivalent system described by the vector $x_c(t)$, applied in the geometric center of the central rod, E, is linear for small displacements (one-dimensional).

Finally, for descriptive simplicity, the parameter related to the effects of the percussion center

$$A_c = \frac{\left( \frac{l_p}{3l_c} - \frac{1}{2} \right) (m_{p_s} - m_{p_i})}{M_{eq}} \qquad (11)$$

is canceled by making the arms of the pendulum and the inverted pendulum of equal mass, a condition generally satisfied by most of the high-quality Folded Pendulum realizations present in the literature [4, 5, 6].

The measurable quantity is the relative motion between the displacement of the base, $x_f(t)$, and the displacement of the central mass, $x_c(t)$, defined by $\Delta x(t) = (x_f(t) - x_c(t))$. In the domain of the Laplace Transform, this relative motion $\Delta x(t)$ can be expressed in a very simple way by means of the relation, well known in the literature [6, 14],

$$\Delta X(s) = \frac{s^2}{s^2 + \frac{\omega_o}{Q(\omega_o)} s + \omega_o^2} \cdot X_f(s) - \frac{1}{M_{eq}} \cdot \frac{1}{s^2 + \frac{\omega_o}{Q(\omega_o)} s + \omega_o^2} \cdot N_c(s) =$$

$$= H(s) \cdot \left( X_f(s) - \frac{1}{s^2 M_{eq}} N_c(s) \right) \qquad (12)$$

where

$$H(s) = \frac{s^2}{s^2 + \frac{\omega_o}{Q(\omega_o)} s + \omega_o^2} \qquad (13)$$

is the transfer function of the system characterized by the global quality coefficient $Q(\omega_o)$ [4, 5, 6] while $N_c(s)$ summarizes the global action of external noises acting on the Folded Pendulum, modeled by a force applied to the rod $\overline{BC}$, among which

there are the Brownian force linked to the temperature of the system itself, the residual forcing due to the cross-talk between the different degrees of freedom, the electronic noise introduced by the signal reading electronics mechanic, etc. [11].

For the sake of completeness, it is important to highlight that the specific implementation of accelerometers based on the Folded Pendulum architecture, a technique well known in the literature and not the subject of the present invention, requires the introduction of automatic control systems aimed at generating external feedback forces by means of actuators (generally of the coil-magnet type), which can always be modeled through $N_c(s)$ [11]. Concerning the latter point, it is important to underline that the invention does not require any application of feedback forces for its operation, as will be clear in the description of the invention itself. However, the feedback can be used for example to broaden the frequency measurement band or in amplitude dynamics of the sensor, reminding that in this case the sensors output signal and acceleration signal and not a displacement one, with further limitations due the introduction of electronic noise generated by the feedback control system.

Equation 12, allowing to interpret the whole system as a system characterized by two inputs ($X_f(s)$ and $N_c(s)$) and only one measurable output, $\Delta X(s)$, is the base for the construction of horizontal seismometers based on the Folded Pendulum architecture, probably the best known and most widespread application of this technology in literature.

In fact, Equation 12 can be rewritten by expressing the displacement of the base $\overline{AD}$, $X_f(s)$, as a function of the measurable relative displacement $\Delta X(s) = (X_f(s) - X_c(s))$ and of the external global noise acting on the whole Folded Pendulum, $N_c(s)$, modeled by a force applied to the rod $\overline{BC}$, as

$$X_f(s) = \frac{1}{H(s)} \Delta X(s) + \frac{1}{s^2 M_{eq}} N_c(s) \qquad (14)$$

Equation 14 shows that the displacement of the base $X_f(s)$ can be determined in principle only under the hypothesis of simultaneous measurement of the relative displacement, $\Delta X(s)$, and of the global noise, $N_c(s)$, the latter noise very difficult to measure. Taking into account, however, that in most applications the noise is relatively low or that, in many cases, can be largely reduced with respect to the signal amplitude by means of suitable and well-known techniques and methodologies already used in many applications (use of low noise electronics for the implementation of mechanical signal readouts, Folded Pendulum installation in closed and/or vacuum containers, temperature reduction of the Folded Pendulum mechanical structure, etc.) in the majority of the applications it is possible to consider, with a good approximation and without loss of generality, $N_c(s) \to 0$. In this hypothesis Equation 14 reduces to

$$X_f(s) = \frac{1}{H(s)} \Delta X(s) \qquad (15)$$

With this approximation, however very well discussed, tested and used in applications [4, 5, 6, 11, 14], the modeling of a Folded Pendulum in its configuration as a horizontal seismometer becomes simple and direct. In fact, the installation of a seismometer requires a rigid anchoring to the ground of the base $\overline{AD}$, which allows setting $x_f(t) = x_g(t)$, being $x_g(t)$ the horizontal seismic displacement of the ground at the fixing point. With this positions, Equation 15 can be rewritten as

$$X_g(s) = \frac{1}{H(s)} \Delta X(s) = \frac{1}{H(s)} (X_g(s) - X_c(s)) \qquad (16)$$

Equation 16 allows to highlight the dynamic behavior of the seismometer, being the transfer function $H(s)$ (defined by Equation 13) the key to understanding this relationship. In fact, in the hypothesis of absence of external noises acting on the Folded Pendulum ($N_c(s) = 0$) and, assuming, for clarity of explanation, a purely sinusoidal input displacement signal $X_g(s)$, it is possible to verify that in the range of frequencies higher than the resonance frequency of the Folded Pendulum ($f_o = \omega_o/2\pi$) and as the frequency increases, the transfer function $H(s)$ tends to 1. Therefore, the quantity $\Delta X(s)$ tends in turn to $X_g(s)$ ($X_g(s) \cong \Delta X(s)$) and, as consequence, the measured signal tends to the value of the seismic signal. From a physical point of view this means that as the frequency increases, the displacements $X_g(s)$ of the base of the Folded Pendulum induce smaller and smaller displacements $X_c(s)$ in the central mass. In this frequency band, therefore, the central mass can be considered with good approximation an inertial mass. Conversely, for frequencies lower than the resonance frequency and as the resonance frequency decreases, the quantity $\Delta X(s)$ decreases more and more, as $X_g(s)$ induces an even wider motion, $X_c(s)$, in the central mass, therefore no longer inertial, physically justifiable by the presence of elastic connections (elastic joints and rigid rods) between the base and the central mass itself. The quantity $\Delta X(s)$ decreases more and more as the frequency decreases until it vanishes, remaining in principle always measurable, albeit attenuated (Equation 12). In the experimental reality, however, the measurement of $\Delta X(s)$ is actually limited by external noises, synthesized in $N_c(s)$, which have the effect of limiting the signal-to-noise ratio of the measurement, reducing the sensitivity of the instrument, especially in the low frequency region, but not changing the basic functioning of the seismometer as described by Equation 16. It is therefore evident that the sensitivity and quality of a seismometer based on the Folded Pendulum architecture largely depends on the capability to design and to realize sensors optimized for external noises $N_c(s)$.

In summary, the prior art always and only describes the Folded Pendulum mechanism (Figures 2 and 3) as a mass-spring system in the most general way and, as far as known and described in the literature, limited to only two types of external forcing:

1. external forcing of the base $\overline{AD}$, described in most of the Folded Pendulum models reported in the literature by means of a support displacement vector, $x_f(t)$;

2. external noise, indicated in the description as $N_c(s)$, which summarizes the global action of external noises acting on the Folded Pendulum, modeled by an applied central mass force, including, for example, the Brownian force related to the temperature of the system itself, the residual forcing due to the cross-talk between the different degrees of freedom, the electronic noise introduced by the electronics for reading the mechanical signal, etc. [14];

3. feedback forcing generally acting on the central mass, carried out by means of actuators (e.g. coil-magnet) controlled by automatic control systems and aimed at the realization of accelerometers based on Folded Pendulum architecture, techniques well known in the literature and not object of the present invention [4 , 5, 6, 11, 14, 15, 16].

It therefore becomes important to underline here, in order to clearly separate the inventive contribution from the state of the art of literature knowledge, that one of the innovative elements of the present invention is the different and innovative mechanical interpretation of the Folded Pendulum (and, more broadly, of the Watt's Linkage). In fact, Equation 14 shows that the Folded Pendulum can be considered a system with two inputs, one of which is the motion of the base, $X_f(s)$, and the other is the noise, $N_c(s)$, which is tried to be reduced in all applications, or in any case to use this input for the introduction of a feedback signal.

In the invention, which will be described in detail in the next section, the innovative element is the use of also this second input as a measurement input, aimed at measuring the physical quantities applied by means of suitable coupling systems, a configuration which makes the Folded Pendulum an innovative differential sensor.

This is the case, in particular, of the application of the Folded Pendulum as a microphone, object of the invention, in which the atmospheric pressure changes, which in fact are the signal to be measured, will be coupled to the second measurement input of the Folded Pendulum.

This innovative interpretation of the Folded Pendulum, never described or presented in the literature, makes it possible for the first time to interpret the Folded Pendulum as a differential sensor, expanding its application in fields that go well beyond those known in the literature, solving relevant technological problems, such as for example that of acoustic measurements in the infrasound region.

**Operating principle of the invention**

**Absolute or differential measurement of Forces and/or Displacements**

Innovative element of the invention is that of using the second input of the Folded Pendulum, the one relating to the rod $\overline{BC}$, as a measurement input, which is, therefore, aimed at measuring physical quantities applied by means of suitably developed transducers.

The use of this input as a measurement input, like the other input (the one related to the base (rod $\overline{AD}$)) makes the Folded Pendulum system interpretable as a differential mechanical amplifier (differential sensor), allowing the resolution of relevant technological problems, such as for example that of the construction of microphones for acoustic measurements in the infrasound region. In fact, as will be described below, the atmospheric pressure changes, which is the signal to be measured, will be coupled to this system, and in particular to the rod $\overline{BC}$, used as the second measurement input, by means of a suitable coupling system (transducer).

In this general model never hypothesized and/or described in the literature, the classic seismometer based on Folded Pendulum is introduced as a particular case, which can be described in this context by the diagram of Figure 5(b), compared to the classic configuration (Figure 5(a)). This comparison will be relevant in the description of the invention given below.

The mechanical output signal will then be expressed by the extended model of Equation 12, to which the new measurement input has been applied (Figure 5(b)), modeled by the external force to be measured, $F_c(s)$, which therefore becomes

$$\Delta X(s) = H(s) \cdot \left[ X_f(s) - \frac{1}{s^2 \, M_{eq}} \left( N_c(s) + F_c(s) \right) \right] =$$

$$= H(s) \cdot \left( X_f(s) - X_{NF_c}(s) \right) \tag{16}$$

being the displacement $X_{NF_c}(s)$ generated by the input noise, $N_c(s)$, and by the forcing $F_c(s)$, object of the measurement itself. The positive direction of the force was defined in a similar way to the direction of the displacement of the central mass, $X_c(s)$. This relationship directly highlights that the Folded Pendulum actually behaves like a differential mechanical amplifier. In the simplifying hypothesis, also aimed at a clearer presentation of the invention, and without any loss of generality, the input noises will in fact be considered negligible $N_c(s) = 0$ (Figure 5(c)), allowing rewrite Equation 17 as

$$\Delta X(s) = H(s) \cdot \left( X_f(s) - \frac{1}{s^2 \, M_{eq}} F_c(s) \right) = H(s) \cdot \left( X_f(s) - X_{F_c}(s) \right) =$$

$$= H(s) \cdot X_f(s) - H_{F_c}(s) \cdot F_c(s) \tag{18}$$

having expressed

$$H_{F_c}(s) = \frac{1}{s^2 \, M_{eq}} \cdot H(s) \tag{19}$$

Equation 18 is in fact an equation in two unknowns, $X_f(s)$ and $F_c(s)$, since all the other physical and mechanical quantities characterizing the Folded Pendulum are known from the project and/or from calibration, the quantity $\Delta X(s)$ measurable and the input noise, $N_c(s)$, negligible, or in any case limiting the performance of the system by defining its experimental sensitivity.

Figure 5(d) shows, instead, the schematization of the Folded Pendulum as a differential mechanical amplifier, in which the forcing, $F_c(s)$, was expressed in terms of displacement of the central rod, $X_{F_c}(s)$, due to forcing, in a way congruent to that of the base, $X_f(s)$, so as to highlight its characteristic of differential mechanical amplifier, as expressed by Equation 18 itself.

However, it is important to emphasize here that the model is in no way limited by the reading technique of the output signal $\Delta x(t)$, not object of the present invention. For this purpose, any technique known in literature, as long as it satisfies the required reading precision of the mechanical signal in the design band, can be used. However, it is emphasized again that the mechanical system described here and object of the present invention is ultimately limited by its thermal noise, as, moreover, well described and reported in the literature [6, 7], to which noises of a different nature can generally be added due to the coupling of the system with the environment, to the interfacing electronics, etc. [14].

In order to proceed in a clear way with the description of the invention, let us briefly summarize the operating principle of a classic dynamic diaphragm microphone. This sensor actually consists of a mechanical membrane oscillator (generally a thin steel plate), which vibrates in presence of external pressure changes, generating a mechanical signal which is converted into an electrical signal by means of a classic coil-magnet transducer (Fig. 1).

Technically, the membrane is stressed by a force proportional to the difference between the pressures insisting on the two sides of the membrane itself, $p_1(t)$ e $p_2(t)$, and to its surface, S, which elastically deforms it by an amount $\Delta x(t)$, quantity measurable by means of a reading system (transducer) of suitable sensitivity and bandwidth, generally of coil-magnet type.

In principle, therefore, the microphone makes it possible to carry out relative measurements between the two pressures insisting on the two sides of the membrane, one of which can be chosen as a reference. For example, the reference pressure can be defined by isolating one of the two sides of the membrane against external pressure variations. By defining as constant internal pressure, $p_1(t)$, and variable external pressure, $p_2(t)$, in the hypothesis of using the microphone at atmospheric pressure, these two quantities can be expressed as

$$p_1(t) = p_o \qquad\qquad p_2(t) = p_o + \Delta p(t) \tag{20}$$

being, $p_o$ the atmospheric pressure) and $\Delta p(t)$, the atmospheric pressure change, object of the measurement (signal). In this hypothesis, but in any case, without any loss of generality, defining, for example, the positive direction of the force if oriented as entering the microphone, the force exerted on the elastic membrane can be linearly modeled as

$$F_p = S \cdot \big(p_2(t) - p_1(t)\big) = S \cdot \Delta p(t) \qquad\qquad (21)$$

The limits of this technology are due to the fact that the realization of microphones with good sensitivity operating in the low frequency region (below a few hundred mHz, in general) mainly requires the reduction of the resonance frequency of the membrane. Low resonance frequency is very difficult to obtain with very compact systems, being actually dependent on the mechanical characteristics of the system, and, in particular, on the elasticity coefficient and on the mass of the membrane.

On the other hand, it is important to underline that the mere improvement of the mechanical performance of the microphone would not in itself be sufficient to guarantee a correct measurement of the pressure changes. In fact, in order to carry out a measurement it is necessary to make the microphone integral with the ground at the point where the measurement is carried out. This point becomes very relevant in the measurement of pressure change especially in the low frequency region.

In fact, in this context and in relation to the quality of the measurement to be made, the effects of the component due to seismic noise on the acoustic signal can play a non-marginal role, the more important the more the acquisition is oriented towards low frequencies, influencing the final accuracy of the measurement. In the case of classic microphones, this (seismic) signal cannot be directly decoupled from the acoustic signal (pressure).

The invention presented here is instead based on a completely different concept. In fact, the membrane system of the classic microphone is replaced by a "differential mechanical amplifier", coupled to a pressure/force transduction system, which overcomes the problems and limits of sensitivity and of harmonic response in the low frequency region of currently existing microphones.

In particular, with reference to Figure 5(c), the invention can be framed according to the *"differential mechanical amplifier"* scheme, which has a displacement input and a force input, the latter being the physical quantity to be measured in a relative or absolute way, whose output signal is expressed by Equation 18.

In particular, the first input of the differential mechanical amplifier is used by anchoring the base $\overline{AD}$ of the mechanical oscillator to the ground, making it integral with it, realizing in this way $x_f(t) = x_g(t)$, being $x_g(t)$ the horizontal seismic displacement of the ground.

The second input is instead the input of the force to be measured, $F_c(t)$, which in the case of an acoustic sensor (microphone) is the external pressure change (but the approach is applicable, in general, to any type of force).

To carry out the reading of this pressure (or of force, in general) the invention requires the insertion of a mechanical pressure transducer (for example) to be connected, only preferably in a rigid manner, to the central rod $\overline{BC}$, as for example schematized in Fig. 6. This transducer consists of a flat plate (preferably rigid) of area S, the shape of which depends on the specific applications, but which in our description we consider circular for simplicity. The pressure exerted on the left side, $p_1$, and the one exerted on the right side, $p_2$, generate a differential force $F_c = - F_p = S \cdot (p_1(t) - p_2(t))$ (Equation 21). This force is applied to the central rod $\overline{BC}$ by means of a rigid (preferably) or non-rigid connection, of any shape and structure, which makes the transducer connected (preferably rigidly and integrally) with the central rod itself, making sure that the force to be measured, $F_c(t)$, is preferably oriented parallel to the direction of motion of the geometric center E of this rod. The fact that both the link and the connection can be non-rigid can be taken into account using the related transfer function, known a priori as all those of the pendulums.

In fact, as previously described, the motion of point E is characterized, by geometric construction and for small displacements, by linear motion described by the vector $x_f(t)$. This choice allows to maximize the coupling (and, therefore, the sensitivity of the instrument) and, at the same time, also maximize the directivity properties of the sensor itself. It is important to underline that if the applied force, $F_c(t)$, is not parallel to the direction of motion of point E, the system will be forced only by the projection of this force along this direction. The real force applied, $F_c(t)$, can be obtained trigonometrically, once the angle of projection is known.

It is emphasized that the flat shape of the plate and the point of connection to the central bar of the Folded Pendulum do not constitute a functional constraint for the invention, these having the only objective of making the description of the invention simple and clear. In particular, the connecting rod AR (or also *"transmission arm"*) between the plate can be rigidly fixed not only at the optimal point E (Figure 7(a)), but at any point of the rod $\overline{BC}$ inside the rotation joints B and C (e.g. Figure 7(b)) and outside (Figure 7(c)). The choice determines the directivity of the final instrument, since, as previously discussed, with the exception of the point E which describes a straight line (maximum directivity), all the other points of the rod $\overline{BC}$ describe Bernoulli lemniscates with more or less amplitude.

At this point it is important to underline that the introduction of a mechanical pressure transducer to be rigidly connected to the central rod $\overline{BC}$ can determine a change of the resonance frequency of the original Folded Pendulum. In fact, the mechanical transducer can be globally assimilated to a mass positioned on the rod $\overline{BC}$ at the connection point. From a modeling point of view, this mass can be considered a calibration mass, $m_t$, whose positioning, as seen previously, has effects on the resonance frequency of the Folded Pendulum (Equations 1-7) since it generally changes the value of the equivalent gravitational spring constant, $K_{g_{eq}}$, (Equation 8) and of the equivalent mass, $M_{eq}$, (Equation 10), quantities that determine the resonance frequency of the Folded Pendulum (Equation 7).

However, it should also be emphasized that being design parameters both the connection position and the mass of the mechanical transducer, it is possible in principle, as it can be deduced from the model described above, to design them in such a way that the resonance frequency of the original Folded Pendulum remains unchanged. Therefore, the aforementioned insertion of the mechanical pressure transducer does not make substantial changes to the Folded Pendulum model, used here for descriptive purposes.

The AR rod can be conveniently rigid, or not rigid with its transfer function which can be taken into account in the interpretation of the measured signal.

Plate S can be for example a capacitor plate with a coil or magnet, and then the sensor would measure an external stress created across the coil or magnet.

The shape of the ELM mechanical element or transducer can be any, provided that a force or a component of a force external to the pendulum is transferred to the central arm of the pendulum itself.

Figure 8 shows the scheme of principle of the realization of a microphone using a classic monolithic configuration of Folded Pendulum SER (Fig. 8(a) in schematized form, Fig. 8(b) in lateral realistic form, Fig. 8(c) in frontal realistic form), present in the literature, however used for the realization of the prototype described below. Unlike the previous case, the monolithic configuration for classic SERM applications generally does not require the physical presence of point E, which is in fact virtual in the present case. However, to optimize the performance of the pressure sensor from the point of view of directionality, it is always possible to structure the Transducer-Folded Pendulum connection rod so as to create the physical point $E$ (obviously the same can be obtained with a finalized design already in the manufacturing phase of the monolithic Folded Pendulum, for example with a support axis AS (cf. Figure 8(b)).

Also in this case, therefore, the system allows to carry out relative measurements of a pressure with respect to a pressure chosen as a reference. And in a similar way to what has been seen for the membrane microphone, referring to Figure 9, the membrane MS can be fixed by isolating one of the two sides of the plate S by placing the mechanical oscillator inside a container CO, sealing the same by connecting the ends of the plate S to the outside part of the box by means of a soft, thin and with very low elasticity junction which has the only purpose of decoupling the internal and external volumes, effectively making the relative pressures practically independent: external pressure changes (pressure signal to be measured) do not change the internal pressure value (reference pressure signal) of the sensor. The container CO is conveniently supported by a SUP mount which rests on a BB base.

It is further important to underline that the separation membrane is not in principle strictly necessary as it is possible to create external structures in which the external container and the plate S are not in contact, but the propagation of the pressure changes from external to internal and/or vice versa can be made very slow by shaping the surface of the plate such as to make not very effective even the relative slow changes of external pressure with respect to the internal one (for example a shape with edges folded over the volume of the container, thus decreasing the air passage volumes and attenuating the pressure changes on the other side of the surface). On the other hand, even in the hypothesis of adding a soft and very thin membrane, with small elastic constant and mass compared to the elastic constant and mass of the system, the natural resonance frequency may not be appreciably changed, and in any case, can always be taken into account in the system design. However, it should be underlined, as further support of what has been described, that any resonance frequency change can always be compensated, for example, by using the simple calibration system with an external calibration mass, as described in the introductory and descriptive part related to the Folded Pendulum model.

Keeping the same definitions, i.e. constant internal pressure, $p_1(t)$, and variable external pressure, $p_2(t)$, for the sake of simplicity and for direct comparison with what was previously discussed regarding classic microphones, in the hypothesis of use of this innovative system also in this case at atmospheric pressure, these two quantities can be expressed as defined in Equation 20. Taking into account the direction previously defined for $F_c$, this forcing can be expressed in the domain of the Laplace transform as

$$F_c(s) = -F_p(s) = S \cdot \big(p_1(s) - p_2(s)\big) = -S \cdot \Delta p(s) \qquad (22)$$

It is reiterated that the pressure $p_o$, chosen as a reference, can be any pressure, being in the example case classically atmospheric pressure, but even zero pressure, indicative of the fact that a vacuum is created in the internal volume.

Therefore, summarizing, in the hypothesis of specializing the innovative model of differential mechanical amplifier, forcing the first entry by fixing the base ($\overline{AD}$) to the ground ($X_A(s) = X_g(s)$), forcing the second entry, $F_c(s)$, by connecting a mechanical pressure transducer (Fig. 6) to the central rod $\overline{BC}$ (Fig. 7), in the hypothesis, simplifying but not limiting, of application of the system at atmospheric pressure (Equation 20), and using Equation 22, Equation 17 can be specialized in

$$\Delta X(s) = H(s) \cdot X_g(s) - H_{F_c}(s) \cdot F_c(s) = H(s) \cdot X_g(s) + H_{F_c}(s) \cdot S \cdot \Delta p(s) \ (23)$$

However, Equation 23 shows that the measurement of the position of the central mass with respect to the support, $\Delta X(s)$, of the Folded Pendulum does not in principle allow the separation of the signal generated by forcing of the central mass due to the pressure variation external, $\Delta p(s)$, from those due to the seismic displacement of the support, $X_g(s)$, due to the differential nature of the mechanical amplifier.

The solution of this problem makes it possible to implement an infrasound microphone whose band is mechanically determined by the resonance frequency of the Folded Pendulum mechanical oscillator, although it is obviously wider in the low frequency region by at least two decades compared to the resonant frequency itself [4, 5, 6].

The trivial and direct mathematical solution to this problem is to set $x_g(t) = 0$, canceling an unknown quantity from Equation 22. Actually this solution is not feasible since it requires not to anchor the instrument to the ground, which, instead, is technically necessary. This problem can be overcome using two different approaches according to the invention:

a) placement of the microphone sensor on an inertial platform. This platform helps to reduce the contribution of seismic noise to the output signal by widening the useful measurement band and improving the sensitivity of the instrument (signal-to-noise ratio between the pressure signal and the seismic signal), effectively realizing $x_g(t) \approx 0$. However, this methodology does not allow a mathematical decoupling between the seismic signal and the acoustic signal. Among other things, in general it would also be very expensive, requiring a further seismic attenuation system;

b) cancellation of the seismic signal, an operation which allows the complete decoupling between the two types of signals, also object of the present invention.

In fact, the cancellation of the seismic signal would solve the technical problem of the signal/noise coupling (e.g. sound/earthquake) introduced by fixing the sensor to the ground, a coupling present in all microphones described in the scientific literature and/or commercially produced.

In the invention this cancellation is obtained by the direct measurement of the seismic signal followed by numerical cancellation, that is subtracting this signal from the signal measured by the acoustic sensor by means of numerical processing, as suggested by Equation 23, which can therefore be rewritten, like

$$\Delta p(s) = \frac{1}{S \cdot H_{F_c}(s)} \Big( \Delta X(s) - H(s) \cdot X_g(s) \Big) \hspace{2cm} (24)$$

For this purpose it is possible to use any seismic sensor (seismometer, accelerometer, etc.) present in literature or commercially available rigidly connected to the base $\overline{AD}$ of the Folded Pendulum, which is able to measure in general $x_f(t)$ and, in the specific case $x_g(t)$, with sensitivity and bandwidth characteristics compatible with the Folded Pendulum ones, or in any case made such by preliminary processing of the acquired data.

It is evident that this general approach can be greatly simplified and above all aimed at obtaining high precision measurements, if the seismic sensor to be used for reading the $x_g(t)$ signal is in fact a seismic sensor characterized by a mechanical oscillator based also on Folded Pendulum architecture, and even more effectively, identical to the one used as the basis for the acoustic signal sensor. In fact, referring to Fig. 10, the most effective way to carry out acoustic noise measurements independent from the local seismic noise is to couple an acoustic sensor as described above (indicated in the figure with the reference SERM) and a classical seismic sensor (indicated in figure with the reference SS), in which the Folded Pendulum is preferably identical to the acoustic sensors Folded Pendulum, so as to ensure identical performance as much as possible, and in particular, resonance frequency and sensitivity. In any case, an effective preliminary calibration of the SERM and SS sensors allows to take into full account any structural difference.

Alternatively, instead of the sensor SS, a (super)attenuator can be provided on which the sensor according to the invention is positioned.

The second oscillator SS is made integral to the same plane (or reference) P to which the first oscillator is integral (or even to the same base block $\overline{AD}$) as the first oscillator), but it is totally enclosed in a container (not shown) in such a way that the central mass is not subject to any external forcing due to pressure variations. In fact, this second configuration is the classic one of inertial seismometers based on Folded Pendulum technology present in the literature. The acoustic sensor can optionally be included in its own container but in such a way that the surface S (or other means of pressure transduction) is in any case in contact with the environment external to the sensor/container. The container can be the same for both oscillators, but with the surface S always in contact with the outside.

Reading means 310, 320 of the test mass in both oscillators are respectively provided, as well as a processing unit 210 to which the signals measured by the reading means arrive at the respective inputs 213, 214. The outputs 211 and 212 of the processing 210 (e.g. a PLC or other microprocessor) are respectively those of the seismic signal and of the acoustic signal.

Therefore, to obtain the measurement of the internal external relative pressure, it is sufficient to use Equation 24 using the signal measured by the first sensor (SERM microphone), $\Delta X(s)$, and the seismic signal measured by the second sensor (SS seismometer), $X_g(s)$, after compensation of the effects due to possible manufacturing differences (e.g. resonance frequency, reading system gain, etc.) following preventive calibration of the two mechanical oscillators. This operation, compensating the seismic noise by a cancellation technique, allows the realization of very broadband low-frequency acoustic sensors (band limited by the mechanical resonance frequency of the oscillator) with mechanical sensitivity defined only by the thermal noise of the Watt's Linkage kinematism [7]. For the sake of completeness, it is also possible to cancel the residual noise due to the presence of air inside the container, which would effectively become a vacuum container. The signal at 212 may already be the acoustic signal without the seismic component.

It is important to underline that this innovative dual differential system also allows the cancellation (or at least the reduction) of the external couplings which could limit the performance of the sensor (e.g. temperature changes, mechanical aging of the oscillators, etc.), since being the two sensors made with construction methods aimed precisely at this purpose, have characteristics which, by construction, change in a similar way when exposed to the same external causes.

In summary, this invention allows the realization of an innovative sound measurement system, with sensitivity and bandwidth characteristics, in particular, in the infrasound region, which currently constitute a challenge that cannot be achieved with the methodologies and techniques present in the literature and whose limits are no longer determined by mechanics, but only by the quality of the mechanical signal reading system, for which there is a wide choice in terms of sensitivity and techniques in the scientific and/or commercial fields. In fact, in the literature and/or on the market there are signal transduction systems (readout) which allow ultra-sensitive measurements, even if generally not capable to reach the ultimate sensitivity of the sensor, determined by its thermal noise.

This does not happen for all the other membrane microphones on the market since the resonance frequency of these membranes is orders of magnitude higher, nor for piezoelectric and/or MEMS microphones, where the noise of the electronics generally represent a limit that, in general, do not to allow the measurement band to be widened below a few tens of mHz.

Obviously, it is important to underline that, although the description refers for simplicity and immediacy of presentation to an acoustic sensor capable of measuring pressure changes that propagate horizontally (or, taking into account the directivity of the sensor, measure the projections of the local variations of pressure along the horizontal direction) the acoustic sensor can also operate vertically. In fact, as is well known in literature, mechanical oscillators based on Folded Pendulum architecture can also be made for vertical applications, as described in patent EP 2 643 711 B1 (in this case in the direction of the acoustic frequency pickup rod there would be also a further forcing to compensate for the force of gravity). In this known technique, the means for coupling the central rod to an external stress (magnets, pre-flexed joints or other) were provided only to compensate the force of gravity, and the sensor described only measured the stress on the frame. Instead, in a completely different way, in the present invention the stress on the arm connected to the central arm is measured. Therefore, even if a vertical configuration is to be used for the present invention, the operating principle as a sensor is different from the prior art.

In addition, the invention described here can also work with the multidimensional oscillator/s referred to in patent application EP 22175640.6, where it is preferable to make the mechanism with very light materials so as not to lose sensitivity. In fact, the external pendulum has a necessarily greater test mass than the increasingly internal ones. Alternatively, according to the present invention three sensors can be suitably oriented for a measurement in the three spatial directions.

The sensor described above can also operate without the container illustrated, for example with a sufficiently large plate (in general, its surface can be circular or have any other shape).

However, this technical choice could still introduce measurement errors due to the fact that the air flow acting on one side could propagate to the other side inducing an opposite force. Therefore, in order to maximize the precision of the measurement, it is preferable that the pressure signal is applied to only one side of the surface similar to what actually happens for the human ear.

Therefore, inside the container, which includes both the first Folded Pendulum (coupled to the outside by means of the transducing surface S discussed above) and the second Folded Pendulum (seismic reference), it is preferable that the pressure is kept constant, for example to the average value of the atmospheric pressure. Obviously, however, any change of the pressure inside the container, even in the long term (i.e. so slow to be outside the measurement band of the sensor according to the specific application) generates an offset in the output signal as a result of this forcing on the mass coming from inside. This variation assumes no relevance for the quality of the measurement only if obviously outside the useful band defined for the specific application, which remains limited only by the mechanical transfer function of the oscillators.

To prevent pressure changes inside the (container, it is possible to use both special shapes of the sensitive surface and of the high-impedance container itself, which limit the internal-external passage of air, as typically occurs in some types of microphones. At most, it is even possible to seal the container) (by physically preventing the external air from entering it or vice versa), by applying a thin, soft surface between the sensitive surface and the container itself, characterized by coefficient of elasticity so low to have no influence in any way the dynamic behavior of the Folded Pendulum itself (Fig. 9).

However, this compensation can assume a very important role in the hypothesis, for example, of changes in external environmental parameters, including for example temperature changes, which produce changes in internal pressure, described in a very simple way, using the law of ideal gases (obviously only for descriptive reasons, but without influencing in any way to the operating principle of the invention) from the relation

$$\Delta p_T = \frac{nR}{V} \Delta T \qquad (25)$$

which in fact would make the internal pressure of the container unstable in the long term, that can be expressed as $p_1(t) = p_o + \Delta p_T$, introducing a forcing of the central mass induced only by the internal temperature changes equal to

$$\Delta F_c = S \, \Delta p_T \qquad (26)$$

which would in fact constitute a further contribution to the forcing, $F_c$, which can be interpreted as noise induced by temperature changes.

Compensation of a sealed container, aimed at minimizing the forcing referred to in Equation 26, can be achieved in two ways, both aimed at maintaining constant pressure.

A first way requires that this compensation is carried out by changes of the internal volume, for example by means of an endless screw connected to a stepper motor, of a quantity that can be expressed by the relation

$$\Delta V = \frac{nR}{p} \Delta T \qquad (27)$$

A second method, on the other hand, requires that the compensation is carried out by adding or removing mass of gas from the sealed container, through an exhaust hole made in the container, the quantity of which can be expressed by the relation

$$\Delta n = -\frac{n^2 R}{pV} \Delta T \qquad (28)$$

Finally, it is important to underline the remarkable directivity of the system itself, which is difficult to reproduce with other types of acoustic sensors. In fact, assuming that the surface S is oriented as in Fig. 7 perpendicular to the direction of motion of the central mass, it is clear that, by construction, the system will only be sensitive to air flows (pressure variations) parallel to this direction, since the other components will in fact be compensated by the mechanical constraint reactions of the Watt's Linkage.

**Realization of an infra-sound microphone**

It is clear that the innovative system described above is open to different constructive interpretations and it is applicable in countless cases both as a pressure sensor, in particular in the infrasound region, and, as will be described hereinafter, as a source of pressure signals in the analogous band and with similar sensitivity, characterized by high quality and relevant performances in terms of directivity, sensitivity and measurement band. In fact, the Folded Pendulum mechanical oscillator, the basic element of the sensor, is a highly directive mechanism, limited as far as sensitivity is concerned by thermal noise only (as demonstrated in the case of monolithic mechanical oscillators), largely lower than mechanical noises (seismic, etc.) present on the earth's surface, and, as far as the measurement band is concerned, by the resonance frequency and by the quality factor of the mechanical oscillator itself, being a second order mechanical system [4, 5, 6].

Furthermore, considering that the shape, dimensions, materials and, in general, the physical and geometric characteristics of the mechanical components of the Watt's Linkage constitute de facto degrees of freedom in the design and construction of the mechanism, provided that the constraints previously defined relating to the Watt's Linkage and the Folded Pendulum which make this mechanism one-dimensional are satisfied, it is possible to develop an infinite number of mechanical realizations which are different from each other but based on the same principle of the invention, specialized and optimized according the specific application (also as regards sensitivity and bandwidth).

For demonstration purpose only, but not exhaustive of the application possibilities of the invention presented herein, the description of a prototype of an air pressure sensor which operates in the low frequency region (microphone for infrasound) is reported. The prototype was built using two identical monolithic mechanical oscillators of the Folded Pendulum type, with dimensions equal to 140 mm (length) x 134 mm (height) x 40 mm (depth). These oscillators, made of thermally distended aluminum alloy AL 7075-T6 (ERGAL) using precision numerical milling and mechanical electro-erosion techniques, are characterized by elastic joints with an ellipticity of 16/5 and a thickness of 100 $\mu$m. These oscillators, however, widely described in the literature, are currently used as oscillators in inertial seismometers for applications aimed at measuring broadband and low-frequency seismic noise in geophysics [7, 8, 9]. For their use for the construction of an infrasound microphone, their natural resonance frequencies have been brought to 250 mHz by means of mechanical calibration with an external calibration weight.

However, in order to understand the limitations in terms of sensitivity of this prototype, it is necessary to underline two relevant elements.

The first element is related to the bandwidth of the system defined by the mechanical oscillator: resonance frequency and quality factor determine the mechanical response of the oscillator, actually a second order system.

The second element is related to the fact that, unlike what happens for seismic measurements, acoustic measurements are pressure measurements, therefore forces per surface unit. Therefore, since classically the oscillator-readout system reads displacements and not forces in a direct way, the value of the mass in motion, $M_{eq}$, assumes a relevant role for the global sensitivity of the system, as evident, for example, by analyzing Equation 18. According to Newton's second law, in fact, the central mass is accelerated due to forcing generated by pressure changes in an inversely proportional way to the mass, generating a relative displacement with respect to the support (quantity measured by the reading system). In fact, the higher the value of the mass, the smaller the amplitude of its displacement, the extent of which is limited by the noise of the reading system used, in general, but, at the best, by the thermal noise of the mechanical oscillator, such as predicted by the fluctuation/dissipation theorem and experimentally proved in [7].

Therefore, the mechanical oscillators of the prototype thus calibrated have a linear useful band limited below 250 mHz. The resonance frequency, however, does not constitute in itself, as theoretically and experimentally demonstrated, a limit to the useful band, but the band in which the central mass is to be considered inertial, in which the relative displacement between the mass and the frame coincides with the absolute displacement of the frame. Since, however, the mechanical system is a second order system, for frequencies lower than the resonance frequency the amplitude of measurable relative displacement decreases with a slope of 40 dB/decade. Therefore, the microphone will be fully usable even for frequencies well below the resonance frequency, taking into account the decrease in sensitivity and the need to compensate for this attenuation in the signal analysis phase.

The two parameters of frequency and central mass therefore constitute a relevant element for the designs aimed at specific applications.

In the case of the prototype made for the purpose of demonstrating the principle of the invention, these parameters do not play a relevant role. In fact, the resonance frequency of the oscillator has been calibrated at 250 mHz, well within the infrasound band. The value of the central mass, however, , that is a design element in the prototype (specifically developed as a mechanical oscillator for broadband seismometers in geophysics), and the insertion of an external disk with a diameter of 10 cm are sufficient to provide the system with a sufficient sensitivity to measure the pressure changes induced by the specially realized source, and, consequently, the evaluation of the performance of the prototype itself.

It is important to emphasize here again that in the design phase it is possible, for example, both to optimize the dimensions of the oscillator (possibly by miniaturizing it, using the scalability property of the Folded Pendulum, however widely documented in the literature [4, 5, 6]) and choose the most suitable material for the application. For example, as regards the choice of materials, the use of a Folded Pendulum oscillator model identical to the one used in the prototype but made in Delrin with similar spectral performances, would in fact allow a halving of the inertial mass due to the ratio between the specific weights of Ergal and Delrin, doubling the sensitivity in the measurement band. This reasoning assumes particular relevance due to the fact that, although the dimensions of the prototype realized are far greater than those of standard microphones, it is evident the possibility of designing microphone systems for infrasound, based on the present invention, with bandwidth, performance and sensitivity higher than the prototypes ones, but also of reduced dimensions, making them comparable with the classic microphones ones, currently on the market, generally of a size of the order of a few cm$^3$.

As regards the mechanical signal reading system (transducer), necessary to convert the mechanical signal into an electrical signal, each oscillator has been equipped with a classic LVDT transducer, a robust and sensitive system, fully suitable for the transduction of standard acoustic signals.

However, it is evident here too that the choice of an LVDT transducer, as indicated in this description, does not constitute a limit or a constraint for the present invention. In fact, it is possible to use any transducer, known in the literature and/or commercially, which is capable of converting a mechanical signal into an electrical signal with a sensitivity suitable for the specific application, without thereby modifying the innovative principles introduced with the present invention. Among these we mention, for example, optical, interferometric, capacitive transducers, etc., already widely applied to mechanical oscillators of the Folded Pendulum type [4, 5, 6].

In summary, the prototype realized consists of two Folded Pendulum mechanical oscillators, equipped with an LVDT reading system, oriented parallel to each other and positioned on a single base rigidly fixed to the ground. Both sensors have been mechanically and electronically calibrated in order to obtain already directly compatible output signals.

The reference sensor was therefore mounted in the classic way, i.e. simply fixed on the base, which in turn was rigidly connected to the ground.

The sensor for measuring the acoustic pressure changes (which was previously shown to behave as a differential mechanical amplifier) was equipped with an external disk with a diameter of 10 cm and a thickness of the order of 2 mm, positioned in such a way that its surface is perpendicular to the motion of the central point of the central mass of the oscillator and integral to by means of two very light metal bars. As highlighted previously, the function of this disc is to convert the change of acoustic pressure into a force proportional to the surface of the disc itself, in order to generate a forcing of the central mass which determines its displacement (measurable).

Therefore, the central mass, by definition inertial from the resonance frequency of the oscillator, can be forced, by construction, only by external pressure changes, which induce forcing on it proportional to the value of the amplitude of the incident acoustic wave projected onto the surface area of the disc and proportional to its surface area.

Therefore, by acquiring the outputs of the two sensors, the first provides the measurement of the absolute value of the seismic signal of the ground and the second provides the measurement of the difference between the seismic signal of the soil and the external acoustic signal. Applying Equation 24, we obtained an acoustic signal completely independent from the seismic signal of the ground on which the system is positioned. It is important to underline that the extraction of the acoustic signal can be performed both electronically in real time and off-line by acquiring the two independent signals and carrying out the numerical operations of extraction. It is important to underline, among other things, that no microphone currently present in the scientific and commercial panorama is able to allow a mathematical separation of the seismic signal from the acoustic one, least of all in the low frequency region, where the seismic signal begins to assume a relevant role and weight compared to the acoustic signal.

It is also evident, from what has been stated above, that an increase in the sensitivity of the instrument, apart from all the design considerations relating to the Folded Pendulum, can be obtained simply by increasing the surface of the disc, whose shape, in general, can be any.

In order to minimize the couplings with external noises, each sensor has been inserted inside a container integral to the support base in order to minimize the couplings with external noises (in particular the seismic sensor from noises of an acoustic type). In addition, the container of the acoustic sensor is provided with a through hole for the support rod which connects the external disk to the central mass of the Folded Pendulum oscillator.

To further minimize indirect acoustic couplings, which could propagate through the base and contribute to the increase of the measured seismic signal, or in any case to the generation of noises due to couplings that are not easily predictable or easily quantifiable in data analysis, the whole system it is positioned inside another larger external container, in which the disc support rod is always passing through. The base of this container has a wider through section than the internal support base so that it can be fixed to the ground without having any type of contact with the former, further reducing indirect acoustic coupling.

The measurements were carried out in the 0.1 Hz - 1 Hz band, using an external source consisting of rotating blades placed at a distance of 5 m, varying both the inclination of the blades and the rotation speed of the system, since both, even if differently, they contribute to the change of the atmospheric pressure and of the frequency of the generated pressure signal. Preliminary measurements carried out in the 0.1 Hz - 1 Hz band confirm the working of the system as an infrasound microphone.

In order to improve the performance for small pressure variations and/or for very slow pressure changes over time, the disk can be connected to the surface of the container by means of a very soft membrane, which does not affect the dynamics of the whole low frequency system, but which creates an airlock, as done in some types of microphones.

Finally, using seismic signals and acoustic signals, the latter cleaned from the seismic signal, the above-described system can be considered as a system for the simultaneous measurement of seismic and acoustic signals, and then as the first broadband vibro-acoustic measurement system, at low frequency, of very high directivity and sensitivity, and as basic unit for its extension to two and three dimensions.

In fact, the coupling of two units as described above, oriented in the two spatial directions, orthogonal to each other, allows the creation of a two-dimensional vibro-acoustic system.

On the other hand, the coupling of three units as described above, oriented in the three spatial directions, orthogonal to each other, allows the creation of a three-dimensional vibro-acoustic system.

Further combinations are obviously possible, aimed at specific applications.

**Realization of a directional source of infrasound signals**

The modeling of the Folded Pendulum, aimed at its application as a microphone, also highlights the possibility of its use as a high quality and directivity signal emitter in the infrasound band, filtered from the seismic noise of the place of positioning.

In the following we will continue the modeling description in the domain of the Laplace Transform, as done in the description of the pressure sensor model, even if it is obviously to be understood that in the particular case of realizing a directional source of infrasound signals, a direct application is required of the signal in the time domain, obtainable biunivocally by applying the Inverse Laplace Transformation.

From a purely technical point of view, the generation of pressure signals can be obtained by using the previously discussed microphone in an inverse way, integrating the system with a system for forcing the central mass with respect to the support. Such a system can consist, without any loss of generality, of a classic coil-magnet system, fixing, for example, the magnet at the geometric center of the central mass, E, and the coil at the support $\overline{AD}$, fixed with respect to the ground, with methods similar to those generally followed for the positioning of the reading systems.

In the hypothesis of absence of seismic signal ($X_f(s) = X_g(s) = 0$) the generation of the pressure signal $\Delta p_{gen}(s)$, would require only the application of a force

$$F_{gen}(s) = -S \cdot \Delta p_{gen}(s) \tag{29}$$

which generates the displacement $X_c(s) = H_{F_c}(s) \cdot F_{gen}(s)$, necessary for the generation of this signal.

However, in real cases, where there is always a seismic signal ($X_g(s) \neq 0$), the correct generation of the signal, $\Delta p_{gen}(s)$, requires the application of a corrective term to the force expressed by the Equation 29, $F_{c_g}(s)$, aimed at compensating the effects of the displacement of the central mass due to the seismic signal, however to be carried out always in real time. Thus, the effective force to be applied for signal generation, $\Delta p_{gen}(s)$, becomes

$$F_c^{ext}(s) = F_{gen}(s) + F_{c_g}(s) = F_{gen}(s) - M_{eq}(1-H(s))s^2 X_g(s) \tag{30}$$

It is important to underline that below the resonance frequency of the Folded Pendulum oscillator, an attenuated pressure signal is generated with a slope of 40 dB/decade, as can be directly deduced from Equation 23, consequent to the typology of the function transfer rate of the system, $H(s)$. An expansion of the signal emission band can be obtained by correcting, even only partially, the force, $F_c^{ext}(s)$, by means of multiplication with a factor inverse to the transfer function $H(s)$.

For this application, therefore, the same system schematized in Figure 10 can be used, consisting of two sensors and a processing system for the extraction of the seismic and pressure signals, applied in a functionally different way. A coil-magnet actuator is applied to the pressure sensor, according to the methods described previously, for the application of the force, $F_c'(s)$, to the central mass.

To this end, the processing system must operate in real-time: acquire the signal coming from the seismometer (seismic sensor), process it in order to obtain the value of the compensation force to be applied, $F_{c_g}(s)$, and add it to the value of the force necessary for the generation of the pressure signal, $F_{gen}(s)$, in order to obtain the force that the coil-magnet actuator positioned on the pressure sensor will have to instantly generate, $F_c(s)$ (Equation 30). In this way the generated signal is made completely independent from the seismic signal (noise).

The methodology described above does not provide for the compensation of external pressure changes (in this case pressure noise). In the case that pressure noise is present, a further force correction term, $F_{c_p}(s)$, must be added to the force $F_c^{ext}(s)$, which compensates in a similar way to what done for the seismic noise, also the pressure noise, $\Delta p_p(s)$, de facto the output signal of the invention used as an infrasound microphone.

$$F_c^{ext2}(s) = F_{gen}(s) + F_{c_g}(s) + F_{c_p}(s) =$$
$$= F_{gen}(s) - M_{eq}(1-H(s))s^2 X_g(s) + S \cdot \Delta p_p(s) \tag{31}$$

In fact, both variables to be used for the generation of force components for pressure noise correction, $\Delta p_p(s)$, and seismic noise, $X_g(s)$, can be directly measured using for example, the pressure sensor (infrasound microphone) described in Figure 10 in addition to the other systems described above.

Finally, the coupling of several basic emission units, along orthogonal directions, allows, as in the case of the vibro-acoustic sensor, the generation of signals in several dimensions.

**Application and advantages of the invention**

The simple prototype application described in the previous paragraph highlights the different and numerous application possibilities of the class of mechanical systems object of the invention.

By way of example only, the problems of environmental and anthropic noise pollution are highlighted, currently of great interest for the safety of the population and for the collection of data necessary for the finalization of medical studies in the sector (effects of infrasound acoustic noise on the human body), in consideration of the fact that at present there is no acoustic data measured in the almost unexplored region of low frequencies (infrasound). And in this context the system proposed with the invention can assume great importance.

Possible applications are described below, presented here only as an example of the application potential of the invention, but not exhaustively, in relation to the possibilities of direct application aimed at solving technological problems in the environmental field:

- Noise pollution measurement.
- Measurement of acoustic noise in the infrasound region produced by large-scale power generation systems, such as wind turbines and/or wind turbine farms.
- Measurement of wind speed and direction in the infrasound region.
- Measurement of signals produced by animals in the low frequency region (infrasound), in order to identify hitherto unexplored methods and types of communication between living beings.
- Measurement of acoustic pollution in the region of infrasound produced by the flight of aircraft, helicopters, drones in inhabited regions.
- Measurement of signals produced in atmospheric environments, but also in submarine environments, since the same principle is perfectly applicable also in liquids.
- Measurement of signals in the infrasound region for petroleum applications aimed at the study and identification of oil fields.
- Development and implementation of low frequency atmospheric and submarine communication systems.

In the foregoing the preferred embodiments have been described and variants of the present invention have been suggested, but it should be understood that those skilled in the art will be able to make modifications and changes without thereby departing from the relative scope of protection, as defined by the claims attached.

**Bibliography**

[1] F. Barone, G. Giordano: Low frequency folded pendulum with high mechanical quality factor, and seismic sensor utilizing such a folded pendulum, PCT WO 2011/004413 A3 (2011), Patent Numbers: IT 1394612 (Italy), EP 2452169 (Europe), JP 5409912 (Japan), RU 2518587 (Russia), AU 2010269796 (Australia), US 8,950,263 (USA), CA 2763204 (Canada).

[2] F. Barone, G. Giordano, F. Acernese: Low frequency folded pendulum with high mechanical quality factor in vertical configuration, and vertical seismic sensor utilizing such a folded pendulum, PCT WO 2012/147112 (2012), Patent Number: IT 1405600 (Italy), EP2643711 (Europe), AU 201247104 (Australia), JP 5981530 (Japan), RU 2589944 (Russia), US 9,256,000 (USA), CA 2825565 (Canada).

[3] F. Barone, G. Giordano, F. Acernese: Method for the measurement of angular and/or linear displacements utilizing one or more folded pendula, PCT WO 2016/020947 (2016), Patent Number: IT 1425605 (Italy), EP3177888 (Europe), JP6664378 (Japan), US 10,345,104 (USA), Canada pending.

[4] F. Barone, G. Giordano: The UNISA Folded Pendulum: A very versatile class of low frequency high-sensitive sensors, Measurement, doi: 10.1016/j.measurement.2017.09.001 (2017).

[5] F. Barone, G. Giordano: A new typology of DC tiltmeter based on the Watt's linkage architecture, Sensors and Actuators A 281, 264277, doi: 10.1016/j.sna.2018.08.015 (2018).

[6] F. Barone, G. Giordano: Mechanical Monolithic Inertial Sensors for Historical and Archeological Heritage Real-Time Broadband Monitoring. In: D'Amico S., Venuti V. (eds) Handbook of Cultural Heritage Analysis. Springer, Cham. https://doi.org/10.1007/978-3-030-60016-7_39 (2022).

[7] F. Travasso, F. Barone, G. Giordano, F. Marchesoni, H. Vocca: Low temperature performances of a monolithic folded pendulum sensor for the third generation of interferometric detectors of gravitational waves, The international GRAvitational-wave Science & technology Symposium (GRASS 2018), 1-2 March 2018, Padova (Italy) (2018), https://agenda.infn.it/event/14869/contributions/26928/ (2018).

[8] S. A. Zawawi, A. A. Hamzah, B. Y. Majlis, F. Mohd-Yasin: A Review of MEMS Capacitive Microphones, Micromachines 11, 484, doi:10.3390/mi11050484 (2020).

[9] F. Reuleaux: The Kinematics of Machinery, (MacMillan and Co., London) (1876).

[10] E.S. Ferguson: Kinematics of Mechanisms from the Time of Watt, United States National Museum Bulletin 228, 185230 (1962).

[11] A. Bertolini, R. DeSalvo, F. Fidecaro, A. Takamori, Monolithic folded pendulum accelerometers for seismic monitoring and active isolation systems, IEEE Trans. Geosci. Remote Sens. 44, 273-276, http://dx.doi.org/10.1109/TGRS.2005.861006 (2006).

[12] A. Bertolini, R. DeSalvo, F. Fidecaro, M. Francesconi, S. Marka, V. Sannibale, D. Simonetti, A. Takamori, H. Tariq: Mechanical design of a single-axis monolithic accelerometer for advanced seismic attenuation systems, Nucl. Instrum. Methods A 556, 616-623, http://dx.doi.org/10.1016/j.nima.2005.10.117 (2006).

[13] F. Acernese, G. Giordano, R. Romano, R. De Rosa, F. Barone: Tunable mechanical monolithic sensor with interferometric readout for low frequency seismic noise measurement, Nucl. Instrum. Methods A 617, 457-458, http://dx.doi.org/10.1016/j.nima.2009.10.112, ISSN: 0168-9002 (2010).

[14] F. Barone, G. Giordano, F. Acernese, R. Romano, Watt's linkage based large band low frequency sensors for scientific applications, Nucl. Instrum. Methods A, http://dx.doi.org/10.1016/j.nima.2015.11.015 (2015).

[15] M. Pinoli, D.G. Blair, L. Ju: Test on a low frequency inverted pendulum system, Meas. Sci. Technol. 64, 995-999 (1993).

[16] D.G. Blair, J. Liu, E.F. Moghaddam, L. Ju: Performance of an ultra-low-frequency folded pendulum, Phys. Lett. A 193, 223-226 (1994).

[17] J.F. Liu, L. Ju, D.G. Blair, Vibration isolation performance of an ultra-low frequency folded pendulum resonator, Phys. Lett. A 228, 243-249, http://dx.doi.org/10.1016/S0375-9601(97)00105-9 (1997).

[18] A. Takamori, A. Bertolini, R. DeSalvo, A. Araya, T. Kanazawa, M. Shinohara: Novel compact tiltmeter for ocean bottom and other frontier observations, Meas. Sci. Technol. 22, 1115901, http://dx.doi.org/10.1088/0957-0233/22/11/115901 (2011).

[19] Jiangfeng Liu Et Al: Near-shore ocean wave measurement using a very low frequency folded pendulum, Measurement Science And Technology, IOP, Bristol (UK), vol. 9, no. 10, 1 October 1998, pages 1772-1776;

[20] F. Barone et al., US 2014/036637 Al;

[21] H. Ma et al., WO2021051951 A1;

[22] H.A. Wilcox, US 4387451 A.

## Claims

1. A method for measuring an external force, comprising performing the following steps:

    A. providing a Watt's parallel linkage (PW, PRW, PMW) comprising:

      - a support ($\overline{AD}$) fixed in a three-dimensional spatial reference system ($xyz$);
      - a first arm ($\overline{AB}$);
      - a second arm ($\overline{DC}$);
      - a central arm ($\overline{BC}$) comprising a test mass;

    wherein the first arm, the second arm and the central arm are constrained to move on a plane of said three-dimensional spatial reference system which comprises said support, and wherein the first arm and the second arm are connected at one of their ends to the central arm by means of corresponding central joint systems ($B$, $C$) and at their other end to the support by means of corresponding terminal joint systems ($A$, $D$), the corresponding central and terminal joint systems having mutually parallel rotation axes perpendicular to said plane, the central arm not being fixed in any point to the support and thus being free to move with respect thereto, and wherein the support ($\overline{AD}$) of Watt's parallel linkage is subjected to a displacement $x_f(t)$ in an inertial reference system ($x_i y_i z_i$), the displacement $x_f(t)$ having nonzero component in the direction ($x$) perpendicular to the rotation axes of the terminal joint systems ($A$, $D$) in the three-dimensional spatial reference system;

    B. connecting a mechanical transducer (ELM) to said central arm ($\overline{BC}$) so as to be adapted to transfer an external force $F_c$ on said central arm so as to have a nonzero component in the direction ($x$) perpendicular to the rotation axes of the joint systems of said central arm ($\overline{BC}$);

    C. providing a system for detecting the measurable displacement of the central arm ($\overline{BC}$), preferably detected in its geometric center $E$, with respect to the support ($\overline{AD}$) in the three-dimensional spatial reference system ($xyz$);

    D. providing a displacement detection system of the support ($\overline{AD}$) in the inertial reference system ($x_i y_i z_i$) or placing the support ($\overline{AD}$) on a superattenuator;

E. at the same time:

E1. measuring the apparent displacement of the central arm ($\overline{BC}$) with respect to the support ($\overline{AD}$) by means of the system for detecting the apparent displacement of the central arm ($\overline{BC}$);

E2. if step D is performed by providing the displacement detection system of the support, measuring the displacement $x_f(t)$ of the support ($\overline{AD}$) by means of the displacement detection system of the support ($\overline{AD}$);

F. determining the external force $F_c$ based on said apparent displacement of the central arm ($\overline{BC}$) in step E1, on the displacement of the support ($\overline{AD}$) in step E2, and on the relationship

$$\Delta X(s) = H(s) \cdot X_f(s) - H_{F_c}(s) \cdot F_c(s)$$

where $\Delta X(s)$ is the Laplace transform of the apparent displacement of the central arm, $F_c(s)$ is the Laplace transform of the external force $F_c(t)$, $X_f(s)$ is the Laplace transform of the displacement $x_f(t)$ of the support measured in step E2 or $X_f(s) \approx 0$ if the superattenuator is provided in step D, $H(s)$ is the transfer function of the Watt's parallel linkage to the force $X_f(s)$, and $H_{F_c}(s)$ is the transfer function of the Watt's parallel linkage to the external force $F_c(s)$.

2. A method according to claim 1, wherein said external force $F_c$ is a force determined by the pressure of a fluid medium in which said Watt's parallel linkage (PW, PRW, PMW) is immersed, and wherein said mechanical transducer (ELM) comprises a preferably rigid transmission arm (AR), preferably rigidly connected, at the opposite end at the central arm, to a surface (S), and wherein said relationship is reduced to:

$$\Delta X(s) = H(s) \cdot X_f(s) - H_{F_c}(s) \cdot S \cdot \left(p_1(s) - p_2(s)\right)$$

wherein $p_1(s)$ is the pressure applied on the proximal side and $p_2(s)$ is the pressure applied on the distal side of the surface (S) with respect to the central arm.

3. A method according to claim 2, wherein the Watt's parallel linkage (PW, PRW, PMW), the apparent arm displacement detection system, and the support displacement detection system are housed in a container configured to maintain a $p_1(s) = p_o$ reference pressure inside, with $p_o$ constant reference pressure.

4. A method according to claim 3, wherein said housing comprises an elastic membrane peripherally fixed to said surface (S) and to an through hole of said housing from which said transmission arm (AR) exits.

5. A method according to one or more of the claims from 2 to 4, wherein said fluid means is a liquid.

6. A method according to any one or more of the claims from 1 to 5, wherein the detection system in step D either consists of or comprises a further Watt's parallel linkage (PW, PRW, PMW), the elements of which are constrained to move on a further plane of the three-dimensional spatial reference system ($xyz$), the further Watt's parallel linkage (PW, PRW, PMW) being free from said mechanical transducer (ELM) and having a further support ($\overline{A'D'}$), a further central arm ($\overline{B'C'}$), a further first arm ($\overline{A'B'}$), and a further second arm ($\overline{D'C'}$), the further support ($\overline{A'D'}$) of said further Watt's parallel linkage being integral with the support ($\overline{AD}$) of the Watt's parallel linkage, said plane and said further plane being preferably parallel, and a further apparent displacement detection system, preferably identical to the one described in step C, for detecting the apparent displacement of the further central arm ($\overline{B'C'}$), again preferably to be detected at its geometric center, $E'$, with respect to the support ($\overline{A'D'}$), and wherein the following further steps take place in step E:

E3. measuring a further apparent displacement, $\Delta X'(s)$, of the further central arm ($\overline{B'C'}$) with respect to the further support ($\overline{A'D'}$) by the further central arm apparent detection system ($\overline{B'C'}$);

E4. determining a further displacement $X'_f(s)$ of the further support based on said further apparent displacement and the following further relationship:

$$\Delta X'(s) = H'(s) \cdot X'_f(s)$$

wherein $\Delta X'(s)$ is the Laplace transform of the further apparent displacement, $H'(s)$ is the transfer function of the further Watt's parallel linkage, and $X'_A(s)$ is the Laplace transform of a further displacement $x'_A(t)$ of the support in the time domain;

E5. deriving the displacement component $X'_A(s)$ parallel to the $X_A(s)$ of the Watt's parallel linkage;

E6. placing said component of step E5 as equal to $X_A(s)$ in said relationship of step F.

7. A method according to claim 6, in which said further Watt's parallel linkage is completely isolated from environmental stresses by its placement in a container.

8. A method according to any one of the claims from 1 to 7, wherein a folded pendulum, consisting of the Watt's parallel linkage (PRW, PMW) wherein, in the rest position, said central arm ($\overline{BC}$) is perpendicular to both the first arm ($\overline{AB}$) and the second arm ($\overline{DC}$), is provided in step A.

9. A method according to claim 8, wherein the folded pendulum (PMW) is made of a monolithic block of appropriate machined material.

10. A method according to any one of the claims 8 or 9, **characterized in that** each of said joining systems comprises two joints.

11. A method according to any one of the claim from 8 a 10, **characterized in that** said joining systems comprise non-circular elliptical joints, in particular traced by removal of two ellipses having eccentricity $\Sigma > 3.2$ and having reciprocal distance d > 10 microns.

12. A method according to one or more of the claims from 8 to 11, wherein each joint system ($A$, $B$) related to the first arm comprises one or more traction joints.

13. A method according to one or more of the claims from 8 to 12, wherein each joint system ($D$, $C$) related to the second arm comprises one or more compression joints.

14. A system (SERM) for measuring an external force, comprising:

   - a Watt's parallel linkage (PW, PRW, PMW) as defined in step A of the method of any one of the claims from 1 to 13;
   - a mechanical transducer (ELM) as defined in step B of the method of any one of the claims from 1 to 13;
   - a system for detecting the apparent displacement of the central arm of the Watt's parallel linkage as defined in step C of the method of any one of the claims from 1 to 13;
   - a Watt's parallel linkage support displacement detection system as defined in step D of the method of any one of the claims from 1 to 13; and
   - a processing unit (210) configured to acquire the measurements of step E and performing step F according to one of claims 1 to 13.

15. A system (SERM) according to claim 14, wherein said external force is a pressure force in a fluid.

16. A system (SERM) according to claim 15, wherein the mechanical transducer (ELM) comprises a rod (AR) connected to said central arm and a surface (S) not parallel to said rod.

17. A system (SERM) according to claim 15 or 16, wherein the parallel linkage and rod (AR) are enclosed in a container (CO), and wherein the surface (S) is in contact on one side with the fluid.

18. A system (SERM) according to claim 17, wherein an elastic membrane (MS) is arranged between the container (CO) and the perimeter of said surface (S).

19. A method for generating pressure signal in a fluid, comprising performing the following steps:

   M. providing a Watt's parallel linkage (PW, PRW, PMW) comprising:

   - a support ($\overline{AD}$) fixed in a three-dimensional spatial reference system ($xyz$);
   - a first arm ($\overline{AB}$);
   - a second arm ($\overline{DC}$);

23

- a central arm ($\overline{BC}$) comprising a test mass;

wherein the first arm, the second arm and the central arm are constrained to move on a plane of said three-dimensional spatial reference system comprising said support, and wherein the first arm and the second arm are connected at one of their ends to the central arm by means of corresponding central joint systems (*B, C*) and at their other end to the support by means of corresponding terminal joint systems (*A, D*), the corresponding central and terminal joint systems having mutually parallel rotation axes perpendicular to said plane, the central arm not being fixed in any point to the support and thus being free to move with respect thereto, and wherein the support ($\overline{AD}$) of Watt's parallel linkage is subjected to a displacement $x_f(t)$ in an inertial reference system ($x_i y_i z_i$), the displacement $x_f(t)$ having nonzero component in the direction (*x*) perpendicular to the rotation axes of the terminal joint systems (*A, D*) in the three-dimensional spatial reference system;

N. connecting a mechanical transducer (ELM) to said central arm ($\overline{BC}$) so as to be adapted to transfer a force applied to the central arm in the fluid as a pressure variation in a direction having a nonzero component in the direction (*x*) perpendicular to the rotation axes of the terminal joint systems (*A, D*) in the three-dimensional spatial reference system;

O. providing a displacement detection system of the support ($\overline{AD}$) in the inertial reference system ($x_i y_i z_i$) or placing the support ($\overline{AD}$) on a superattenuator;

P. providing the Watt's parallel linkage with a system for implementing a force to move the central arm ($\overline{BC}$), preferably in its geometric center *E*, with respect to the support ($\overline{AD}$);

Q. measuring, if the superattenuator is not present, the support displacement ($\overline{AD}$) by means of the support displacement detection system ($\overline{AD}$) in step O;

R. applying the force to said central arm through the actuating system in step P:

$$F_c^{ext}(s) = F_{gen}(s) + F_{c_g}(s)$$

where $F_{gen}(s)$ is the force required to generate a pressure signal $\Delta p_{gen}(s)$ and $F_{c_g}(s)$ is the force required to compensate for the effects of the displacement of the test mass due to the displacement of the support ($\overline{AD}$).

20. A method according to claim 19, wherein the support displacement detection system ($\overline{AD}$) in step O either consists of or comprises a further Watt's parallel linkage (PW, PRW, PMW).

**Patentansprüche**

1. Verfahren zum Messen einer externen Kraft, das die Durchführung der folgenden Schritte umfasst:

A. Bereitstellen eines Watt-Gestänges mit Parallelogramm (PW, PRW, PMW), das Folgendes umfasst:

- ein Auflager ($\overline{AD}$), befestigt in einem dreidimensionalen räumlichen Bezugssystem (*xyz*);
- einen ersten Arm ($\overline{AB}$);
- einen zweiten Arm ($\overline{DC}$);
- einen zentralen Arm ($\overline{BC}$), der eine Probemasse umfasst;

wobei der erste, der zweite und der zentrale Arm an die Bewegung auf einer Ebene des dreidimensionalen räumlichen Bezugssystems mit dem Auflager gebunden sind, und wobei der erste und der zweite Arm an einem ihrer Enden mittels entsprechender zentraler Gelenksysteme (*B, C*) mit dem zentralen Arm verbunden sind und an ihrem anderen Ende mittels entsprechender endseitiger Gelenksysteme am Auflager (*A, D*) befestigt sind, wobei die entsprechenden zentralen Systeme und endseitigen Gelenksysteme zueinander parallele Drehachsen senkrecht zur Ebene aufweisen, wobei der zentrale Arm an keinem Punkt am Auflager befestigt ist und sich somit relativ zu diesem frei bewegen kann, wobei das Auflager ($\overline{AD}$) des Watt-Gestänges mit Parallelogramm einer Verschiebung $x_f(t)$ in einem inertialen Bezugssystem ($x_i y_i z_i$) unterliegt, wobei die Verschiebung $x_f(t)$ eine Komponente ungleich Null in die Richtung (*x*) senkrecht zu den Drehachsen der endseitigen Gelenksysteme (*A, D*) im dreidimensionalen räumlichen Bezugssystem aufweist;

B. Verbinden eines mechanischen Wandlers (ELM) mit dem zentralen Arm ($\overline{BC}$), sodass ersterer geeignet ist, eine äußere Kraft $F_c$ auf den zentralen Arm zu übertragen, sodass diese eine Komponente ungleich Null in die Richtung (*x*) senkrecht zu den Drehachsen der Gelenkverbindungssysteme des zentralen Arms ($\overline{BC}$) aufweist;

C. Bereitstellen eines Systems zum Erkennen der messbaren Verschiebung des zentralen Arms ($\overline{BC}$), vorzugs-

weise in seinem geometrischen Mittelpunkt E erkannt, in Bezug auf das Auflager ($\overline{AD}$) im dreidimensionalen räumlichen Bezugssystem (*xyz*);

D. Bereitstellen eines Systems zur Erkennung der Verschiebung des Auflagers ($\overline{AD}$) im inertialen Bezugssystem ($x_i y_i z_i$) oder Anbringen des Auflagers ($\overline{AD}$) auf einem Superdämpfer;

E. gleichzeitig:

E1. Messen der scheinbaren Verschiebung des zentralen Arms ($\overline{BD}$) in Bezug auf das Auflager ($\overline{AD}$) mittels des Systems zum Erkennen der scheinbaren Verschiebung des zentralen Arms ($\overline{BC}$);

E2. falls Schritt D durch Bereitstellen des Systems zur Erkennung der Verschiebung des Auflagers erfolgt, Messen der Verschiebung $x_f(t)$ des Auflagers ($\overline{AD}$) mittels des Systems zur Erkennung der Verschiebung des Auflagers ($\overline{AD}$);

F. Bestimmen der äußeren Kraft $F_c$ anhand der scheinbaren Verschiebung des zentralen Arms ($\overline{BC}$) in Schritt E1 auf die Verschiebung des Auflagers ($\overline{AD}$) in Schritt E2 und auf die Beziehung

$$\Delta X(s) = H(s) \cdot X_f(s) - H_{F_c}(s) \cdot F_c(s)$$

wobei $\Delta X(s)$ die Laplace-Transformation der scheinbaren Verschiebung des zentralen Arms ist, $F_c(s)$ die Laplace-Transformation der äußeren Kraft ist, $F_c(t)$, $X_f(s)$ die Laplace-Transformation der Verschiebung $x_f(t)$ des in Schritt E2 gemessenen Auflagers ist oder $X_f(s) \approx 0$ wenn der Superdämpfer in Schritt D bereitgestellt ist, $H(s)$ die Übertragungsfunktion des Watt-Gestänges mit Parallelogramm auf die Kraft $X_f(s)$ ist und $H_{F_c}(s)$ die Übertragungsfunktion des Watt-Gestänges mit Parallelogramm auf die äußere Kraft $F_c(s)$ ist.

2. Verfahren nach Anspruch 1, wobei die äußere Kraft $F_c$ eine vom Druck eines Fluidmediums bestimmte Kraft ist, in welches das Watt-Gestänge mit Parallelogramm (PW, PRW, PMW) eingetaucht wird, wobei der mechanische Wandler (ELM) einen vorzugsweise starren Übertragungsarm (AR) umfasst, der vorzugsweise starr am gegenüberliegenden Ende am zentralen Arm mit einer Fläche (S) verbunden ist, und wobei sich diese Beziehung reduziert auf:

$$\Delta X(s) = H(s) \cdot X_f(s) - H_{F_c}(s) \cdot S \cdot (p_1(s) - p_2(s))$$

wobei $p_1(s)$ der auf die proximale Seite und $p_2(s)$ der auf die distale Seite der Fläche ausgeübte Druck (S) in Bezug auf den zentralen Arm ist.

3. Verfahren nach Anspruch 2, wobei das Watt-Gestänge mit Parallelogramm (PW, PRW, PMW), das System zur Erkennung der scheinbaren Verschiebung des Arms und das System zur Erkennung der Verschiebung des Auflagers in einem Behälter untergebracht sind, der so konfiguriert ist, dass er einen inneren Referenzdruck $p_1(s) = p_o$ mit konstantem Referenzdruck $p_o$ aufrechterhält.

4. Verfahren nach Anspruch 3, wobei das Gehäuse eine elastische Membran umfasst, die peripher an der Fläche (S) und an einer Durchgangsöffnung des Gehäuses befestigt ist, aus welcher der Übertragungsarm (AR) austritt.

5. Verfahren nach einem oder mehreren der Ansprüche von 2 bis 4, wobei das Fluidmedium eine Flüssigkeit ist.

6. Verfahren nach einem oder mehreren der Ansprüche von 1 bis 5, wobei das Erkennungssystem in Schritt D entweder aus einem weiteren Watt-Gestänge mit Parallelogramm (PW, PRW, PMW) besteht oder dieses umfasst, dessen Elemente an die Bewegung auf einer weiteren Ebene des dreidimensionalen räumlichen Bezugssystems (*xyz*) gebunden sind, wobei das weitere Watt-Gestänge mit Parallelogramm (PW, PRW, PMW) frei von dem mechanischen Wandler (ELM) ist und ein weiteres Auflager ($\overline{A'D'}$), einen weiteren zentralen Arm ($\overline{B'C'}$), einen weiteren ersten Arm ($\overline{A'B'}$) und einen weiteren zweiten Arm ($\overline{D'C'}$) aufweist, wobei das weitere Auflager ($\overline{A'D'}$) des weiteren Watt-Gestänges mit Parallelogramm mit dem Auflager ($\overline{AD}$) des Watt-Gestänges mit Parallelogramm ein Ganzes bildet, wobei diese Ebene und diese weitere Ebene vorzugsweise parallel sind, und ein weiteres System zur Erkennung der scheinbaren Verschiebung, das vorzugsweise mit dem in Schritt C beschriebenen System identisch ist, um die scheinbare Verschiebung des weiteren zentralen Arms ($\overline{B'C'}$) zu erkennen, wiederum vorzugsweise in seinem geometrischen Mittelpunkt, $E'$, in Bezug auf das Auflager ($\overline{A'D'}$) zu erkennen, und wobei in Schritt E folgende weitere Schritte erfolgen:

E3. Messen einer weiteren scheinbaren Verschiebung, $\Delta X'(s)$, des weiteren zentralen Arms ($\overline{B'C'}$) in Bezug auf das weitere Auflager ($\overline{A'D'}$) durch das weitere System der scheinbaren Erkennung des zentralen Arms ($\overline{B'C'}$);

E4. Bestimmen einer weiteren Verschiebung $X'_f(s)$ des weiteren Auflagers anhand der weiteren scheinbaren Verschiebung und der folgenden weiteren Beziehung:

$$\Delta X'(s) \; = \; H'(s) \; \cdot \; X'_f(s)$$

wobei $\Delta X'(s)$ die Laplace-Transformation der weiteren scheinbaren Verschiebung ist, $H'(s)$ die Übertragungsfunktion des weiteren Watt-Gestänges mit Parallelogramm ist und $X'_f(s)$ die Laplace-Transformation einer weiteren Verschiebung $x'_f(t)$ des Auflagers in der Zeitdomäne ist;

E5. Ableiten der Verschiebungskomponente $X'_f(s)$ parallel zur $X_f(s)$ des Watt-Gestänges mit Parallelogramm;

E6. Gleichsetzen der Komponente aus Schritt E5 mit $X_f(s)$ in der Beziehung von Schritt F.

7. Verfahren nach Anspruch 6, wobei das weitere Watt-Gestänge mit Parallelogramm aufgrund seiner Anordnung in einem Behälter vollständig vor Umwelteinflüssen geschützt ist.

8. Verfahren nach einem der Ansprüche von 1 bis 7, wobei in Schritt A ein gefaltetes Pendel (folded pendulum) bereitgestellt wird, das aus dem Watt-Gestänge mit Parallelogramm (PRW, PMW) besteht, wobei in der Ruheposition der zentrale Arm ($\overline{BC}$) sowohl zum ersten Arm ($\overline{AB}$) als auch zum zweiten Arm ($\overline{DC}$) senkrecht steht.

9. Verfahren nach Anspruch 8, wobei das gefaltete Pendel (PMW) aus einem monolithischen Block aus geeignetem bearbeiteten Material besteht.

10. Verfahren nach einem der Ansprüche 8 oder 9, **dadurch gekennzeichnet, dass** jedes der Verbindungssysteme zwei Gelenke umfasst.

11. Verfahren nach einem der Ansprüche von 8 bis 10, **dadurch gekennzeichnet, dass** die Verbindungssysteme nicht kreisförmige, sondern elliptische Gelenke umfassen, die insbesondere durch das Entfernen zweier Ellipsen mit einer Exzentrizität $\Sigma > 3{,}2$ und in einem Abstand voneinander von d > 10 Mikrometer vorgezeichnet sind.

12. Verfahren nach einem oder mehreren der Ansprüche von 8 bis 11, wobei jedes mit dem ersten Arm zusammenhängende Gelenksystem ($A, B$) ein oder mehrere Zuggelenke umfasst.

13. Verfahren nach einem oder mehreren der Ansprüche von 8 bis 12, wobei jedes mit dem zweiten Arm zusammenhängende Gelenksystem ($D, C$) ein oder mehrere Druckgelenke umfasst.

14. System (SERM) zum Messen einer externen Kraft, das Folgendes umfasst:

- ein Watt-Gestänge mit Parallelogramm (PW, PRW, PMW), wie in Schritt A des Verfahrens nach einem der Ansprüche von 1 bis 13 definiert;
- einen mechanischen Wandler (ELM), wie in Schritt B des Verfahrens nach einem der Ansprüche von 1 bis 13 definiert;
- ein System zur Erkennung der scheinbaren Verschiebung des zentralen Arms des Watt-Gestänges mit Parallelogramm, wie in Schritt C des Verfahrens nach einem der Ansprüche von 1 bis 13 definiert;
- ein System zum Erkennen der Verschiebung des Auflagers des Watt-Gestänges mit Parallelogramm, wie in Schritt D des Verfahrens nach einem der Ansprüche von 1 bis 13 definiert; und
- eine Verarbeitungseinheit (210), die konfiguriert ist, um die Messungen aus Schritt E zu erfassen und Schritt F nach einem der Ansprüche von 1 bis 13 auszuführen.

15. System (SERM) nach Anspruch 14, wobei die externe Kraft eine Druckkraft in einem Fluid ist.

16. System (SERM) nach Anspruch 15, wobei der mechanische Wandler (ELM) eine mit dem zentralen Arm verbundene Stange (AR) und eine zu dieser Stange nicht parallele Fläche (S) umfasst.

17. System (SERM) nach Anspruch 15 oder 16, wobei das Gestänge mit Parallelogramm und die Stange (AR) in einem Behälter (CO) eingeschlossen sind und wobei die Fläche (S) auf einer Seite mit dem Fluid in Kontakt ist.

**18.** System (SERM) nach Anspruch 17, wobei eine elastische Membran (MS) zwischen dem Behälter (CO) und dem Umfang der Fläche (S) angeordnet ist.

**19.** Verfahren zum Erzeugen eines Drucksignals in einem Fluid, das die Durchführung der folgenden Schritte umfasst:

M. Bereitstellen eines Watt-Gestänges mit Parallelogramm (PW, PRW, PMW), das Folgendes umfasst:

- ein in einem dreidimensionalen räumlichen Bezugssystem ($xyz$) befestigtes Auflager ($\overline{AD}$);
- einen ersten Arm ($\overline{AB}$);
- einen zweiten Arm ($\overline{DC}$);
- einen zentralen Arm ($\overline{BC}$), der eine Probemasse umfasst;

wobei der erste, der zweite und der zentrale Arm an die Bewegung auf einer Ebene des dreidimensionalen räumlichen Bezugssystems mit dem Auflager gebunden sind, und wobei der erste und der zweite Arm an einem ihrer Enden mittels entsprechender zentraler Gelenksysteme ($B$, $C$) mit dem zentralen Arm verbunden sind und an ihrem anderen Ende mittels entsprechender endseitiger Gelenksysteme ($A$, $D$) am Auflager befestigt sind, wobei die entsprechenden zentralen Systeme und endseitigen Gelenksysteme zueinander parallele Drehachsen senkrecht zur Ebene aufweisen, wobei der zentrale Arm an keinem Punkt am Auflager befestigt ist und sich somit relativ zu diesem frei bewegen kann, wobei das Auflager ($\overline{AD}$) des Watt-Gestänges mit Parallelogramm einer Verschiebung $x_f(t)$ in einem inertialen Bezugssystem ($x_iy_iz_i$) unterliegt, wobei die Verschiebung $x_f(t)$ eine Komponente ungleich Null in die Richtung ($x$) senkrecht zu den Drehachsen der endseitigen Gelenksysteme ($A$, $D$) im dreidimensionalen räumlichen Bezugssystem aufweist;

N. Verbinden eines mechanischen Wandlers (ELM) mit dem zentralen Arm ($\overline{BC}$), sodass ersterer geeignet ist, eine auf den zentralen Arm in dem Fluid ausgeübte Kraft als Druckschwankung in eine Richtung zu übertragen, die eine Komponente ungleich Null in die Richtung ($x$) senkrecht zu den Drehachsen der endseitigen Gelenksysteme des zentralen Arms ($A$, $D$) im dreidimensionalen räumlichen Bezugssystem aufweist;

O. Bereitstellen eines Systems zur Erkennung der Verschiebung des Auflagers ($\overline{AD}$) im inertialen Bezugssystem ($x_iy_iz_i$) oder Anbringen des Auflagers ($\overline{AD}$) auf einem Superdämpfer;

P. Bereitstellen des Watt-Gestänges mit Parallelogramm mit einem System zum Umsetzen einer Kraft zur Bewegung des zentralen Arms ($\overline{BC}$), vorzugsweise in dessen geometrischem Zentrum $E$, in Bezug auf das Auflager ($\overline{AD}$);

Q. Messen der Verschiebung ($\overline{AD}$) des Auflagers bei nicht vorhandenem Superdämpfer mittels des Systems zur Erkennung der Verschiebung ($\overline{AD}$) in Schritt O;

R. Ausüben der Kraft auf den zentralen Arm durch das Betätigungssystem in Schritt P:

$$F_c^{ext}(s) = F_{gen}(s) + F_{c_g}(s)$$

wobei $F_{gen}(s)$ die erforderliche Kraft ist, um ein Drucksignal $\Delta p_{gen}(s)$ zu erzeugen und $F_{c_g}(s)$ die erforderliche Kraft ist, um die Auswirkungen der Verschiebung der Probemasse aufgrund der Verschiebung des Auflagers ($\overline{AD}$) auszugleichen.

**20.** Verfahren nach Anspruch 19, wobei das System zur Erkennung der Verschiebung des Auflagers ($\overline{AD}$) in Schritt O entweder aus einem weiteren Watt-Gestänge mit Parallelogramm (PW, PRW, PMW) besteht oder dieses umfasst.

**Revendications**

**1.** Procédé de mesure d'une force externe, comprenant la réalisation des étapes suivantes :

A. fournir une liaison parallèle de Watt (PW, PRW, PMW) comprenant :

- un support ($\overline{AD}$) fixé dans un système de référence spatiale tridimensionnel ($xyz$) ;
- un premier bras ($\overline{AB}$) ;
- un deuxième bras ($\overline{DC}$) ;
- un bras central ($\overline{BC}$) comprenant une masse d'essai ;

dans lequel le premier bras, le deuxième bras et le bras central sont contraints de se déplacer sur un plan dudit système de référence spatiale tridimensionnel qui comprend ledit support, et dans lequel le premier bras et le deuxième bras sont reliés à l'une de leurs extrémités au bras central au moyen de systèmes d'articulation centrale correspondants (*B, C*) et à leur autre extrémité au support au moyen de systèmes de jonction terminaux correspondants (*A, D*), les systèmes d'articulation centrale et terminale correspondants ayant des axes de rotation mutuellement parallèles perpendiculaires audit plan, le bras central n'étant fixé en aucun point au support et étant ainsi libre de se déplacer par rapport à celui-ci, et dans lequel le support ($\overline{AD}$) de la liaison parallèle de Watt est soumis à un déplacement $x_f(t)$ dans un système de référence inertiel ($x_i y_i z_i$), le déplacement $x_f(t)$ ayant une composante non nulle dans la direction (*x*) perpendiculaire aux axes de rotation des systèmes d'articulation terminale (*A, D*) dans le système de référence spatiale tridimensionnel ;

B. relier un transducteur mécanique (ELM) audit bras central ($\overline{BC}$) de manière à être adapté pour transférer une force externe $F_c$ sur ledit bras central de manière à avoir une composante non nulle dans la direction (*x*) perpendiculaire aux axes de rotation des systèmes d'articulation dudit bras central ($\overline{BC}$) ;

C. fournir un système de détection du déplacement mesurable du bras central ($\overline{BC}$), de préférence détecté dans son centre géométrique $E$, par rapport au support ($\overline{AD}$) dans le système de référence spatiale tridimensionnel (*xyz*) ;

D. fournir un système de détection de déplacement du support ($\overline{AD}$) dans le système de référence inertiel ($x_i y_i z_i$) ou en plaçant le support ($\overline{AD}$) sur un superatténuateur ;

E. en même temps :

E1. mesurer le déplacement apparent du bras central ($\overline{BD}$) par rapport au support ($\overline{AD}$) au moyen du système de détection du déplacement apparent du bras central ($\overline{BC}$) *;*

E2. si l'étape D est réalisée en fournissant le système de détection de déplacement du support, en mesurant le déplacement $x_f(t)$ du support ($\overline{AD}$) au moyen du système de détection de déplacement du support ($\overline{AD}$) ;

F. déterminer la force externe $F_c$ sur la base dudit déplacement apparent du bras central ($\overline{BC}$) à l'étape E1, sur le déplacement du support ($\overline{AD}$) à l'étape E2, et sur la relation

$$\Delta X(s) \ = \ H(s) \ \cdot \ X_f(s) \ - \ H_{F_c}(s) \ \cdot \ F_c(s)$$

où $\Delta X(s)$ est la transformée de Laplace du déplacement apparent du bras central, $F_c(s)$ est la transformée de Laplace de la force externe, $F_e(t)$, $X_f(s)$ est la transformée de Laplace du déplacement $x_f(t)$ du support mesuré à l'étape E2 ou $X_f(s) \approx 0$ si le superatténuateur est prévu à l'étape D, $H(s)$ est la fonction de transfert de la liaison parallèle de Watt à la force $X_f(s)$, et $H_{F_c}(s)$ est la fonction de transfert de la liaison parallèle de Watt à la force externe $F_c(s)$.

2. Procédé selon la revendication 1, dans lequel ladite force externe $F_c$ est une force déterminée par la pression d'un milieu fluide dans lequel ladite liaison parallèle de Watt (PW, PRW, PMW) est immergée, et dans lequel ledit transducteur mécanique (ELM) comprend un bras de transmission de préférence rigide (AR), de préférence relié rigidement, à l'extrémité opposée au bras central, à une surface (S), et dans lequel ladite relation est réduite à :

$$\Delta X(s) \ = \ H(s) \ \cdot \ X_f(s) \ - \ H_{F_c}(s) \ \cdot \ S \ \cdot \ (p_1(s) \ - \ p_2(s))$$

où $p_1(s)$ est la pression appliquée sur le côté proximal et $p_2(s)$ est la pression appliquée sur le côté distal de la surface (S) par rapport au bras central.

3. Procédé selon la revendication 2, dans lequel la liaison parallèle de Watt (PW, PRW, PMW), le système de détection de déplacement apparent du bras et le système de détection de déplacement du support sont logés dans un conteneur configuré pour maintenir une pression de référence $p_1(s) = p_o$ à l'intérieur, avec pression de référence constante $p_o$.

4. Procédé selon la revendication 3, dans lequel ledit boîtier comprend une membrane élastique fixée périphériquement à ladite surface (S) et à un trou traversant dudit boîtier d'où sort ledit bras de transmission (AR).

5. Procédé selon une ou plusieurs des revendications 2 à 4, dans lequel ledit moyen fluide est un liquide.

6. Procédé selon l'une quelconque des revendications 1 à 5, dans lequel le système de détection à l'étape D consiste en ou comprend une autre liaison parallèle de Watt (PW, PRW, PMW), dont les éléments sont contraints de se déplacer sur un autre plan du système de référence spatiale tridimensionnel ($\overline{xyz}$), la liaison parallèle de Watt supplémentaire (PW, PRW, PMW) étant exempte dudit transducteur mécanique (ELM) et possédant un support supplémentaire ($\overline{A'D'}$), un autre bras central ($\overline{B'C'}$), un autre premier bras ($\overline{A'B'}$), et un autre deuxième bras ($\overline{D'C'}$), le support supplémentaire (A'D') de ladite liaison parallèle de Watt supplémentaire étant solidaire du support ($\overline{AD}$) de la liaison parallèle de Watt, ledit plan et ledit autre plan étant de préférence parallèles, et un autre système de détection de déplacement apparent, de préférence identique à celui décrit à l'étape C, pour détecter le déplacement apparent de l'autre bras central ($\overline{B'C'}$), de préférence à détecter à son centre géométrique, E', par rapport au support ($\overline{A'D'}$), et dans lequel les étapes supplémentaires suivantes ont lieu à l'étape E :

E3. mesurer un déplacement apparent supplémentaire, $\Delta X'(s)$, du bras central supplémentaire ($\overline{B'C'}$) en ce qui concerne le soutien supplémentaire (A'D') par le système de détection apparent du bras central supplémentaire ($\overline{B'C'}$) ;

E4. déterminer un déplacement supplémentaire $X'_f(s)$ du support supplémentaire basé sur ledit déplacement apparent supplémentaire et la relation supplémentaire suivante :

$$\Delta X'(s) \;=\; H'(s) \,\cdot\, X'_f(s)$$

où $\Delta X'(s)$ est la transformée de Laplace du déplacement apparent ultérieur, $H'(s)$ est la fonction de transfert de la liaison parallèle supplémentaire de Watt, et $X'_f(s)$ est la transformée de Laplace d'un déplacement supplémentaire $x'_f(t)$ du support dans le domaine temporel ;

E5. dériver la composante de déplacement $X'_f(s)$ parallèle à la $X_f(s)$ de la liaison parallèle de Watt ;

E6. placer ledit composant de l'étape E5 comme égal à $X_f(s)$ dans ladite relation de l'étape F.

7. Procédé selon la revendication 6, dans lequel ladite autre liaison parallèle de Watt est complètement isolée des contraintes environnementales par son placement dans un conteneur.

8. Procédé selon l'une quelconque des revendications 1 à 7, dans lequel un pendule plié, constitué de la liaison parallèle de Watt (PRW, PMW) dans lequel, en position de repos, ledit bras central ($\overline{BC}$) est perpendiculaire à la fois au premier bras ($\overline{AB}$) et au deuxième bras ($\overline{DC}$), est fourni à l'étape A.

9. Procédé selon la revendication 8, dans lequel le pendule plié (PMW) est constitué d'un bloc monolithique de matériau usiné approprié.

10. Procédé selon l'une quelconque des revendications 8 ou 9, **caractérisé en ce que** chacun desdits systèmes de jonction comprend deux articulations.

11. Procédé selon l'une quelconque des revendications 8 à 10, **caractérisé en ce que** lesdits systèmes d'assemblage comprennent des joints elliptiques non circulaires, notamment tracés par suppression de deux ellipses présentant une excentricité $\Sigma > 3.2$ et ayant une distance réciproque d > 10 microns.

12. Procédé selon une ou plusieurs des revendications 8 à 11, dans lequel chaque système d'articulation (A, B) relatif au premier bras comprend une ou plusieurs articulations de traction.

13. Procédé selon une ou plusieurs des revendications 8 à 12, dans lequel chaque système d'articulation (D, C) relatif au second bras comprend une ou plusieurs articulations de compression.

14. Système (SERM) de mesure d'une force externe, comprenant :

- une liaison parallèle de Watt (PW, PRW, PMW) telle que définie à l'étape A du procédé selon l'une quelconque des revendications 1 à 13 ;
- un transducteur mécanique (ELM) tel que défini à l'étape B du procédé selon l'une quelconque des revendications 1 à 13 ;
- un système de détection du déplacement apparent du bras central de la liaison parallèle de Watt tel que défini à l'étape C du procédé selon l'une quelconque des revendications 1 à 13 ;
- un système de détection de déplacement de support de liaison parallèle de Watt tel que défini à l'étape D du procédé selon l'une quelconque des revendications 1 à 13 ; et

- une unité de traitement (210) configurée pour acquérir les mesures de l'étape E et réaliser l'étape F selon l'une des revendications 1 à 13.

**15.** Système (SERM) selon la revendication 14, dans lequel ladite force externe est une force de pression dans un fluide.

**16.** Système (SERM) selon la revendication 15, dans lequel le transducteur mécanique (ELM) comprend une tige (AR) reliée audit bras central et une surface (S) non parallèle à ladite tige.

**17.** Système (SERM) selon la revendication 15 ou 16, dans lequel la liaison parallèle et la tige (AR) sont enfermées dans un récipient (CO), et dans lequel la surface (S) est en contact d'un côté avec le fluide.

**18.** Système (SERM) selon la revendication 17, dans lequel une membrane élastique (MS) est disposée entre le récipient (CO) et le périmètre de ladite surface (S).

**19.** Procédé de génération d'un signal de pression dans un fluide, comprenant la réalisation des étapes suivantes :

M. fournir une liaison parallèle de Watt (PW, PRW, PMW) comprenant :

- un support ($\overline{AD}$) fixé dans un système de référence spatiale tridimensionnel (*xyz*) ;
- un premier bras ($\overline{AB}$) *;*
- un deuxième bras ($\overline{DC}$) *;*
- un bras central ($\overline{BC}$) comprenant une masse d'essai ;

dans lequel le premier bras, le deuxième bras et le bras central sont contraints de se déplacer sur un plan dudit système de référence spatiale tridimensionnel qui comprend ledit support, et dans lequel le premier bras et le deuxième bras sont reliés à l'une de leurs extrémités au bras central au moyen de systèmes d'articulation centrale correspondants (*B, C*) et à leur autre extrémité au support au moyen de systèmes de jonction terminaux correspondants *(A, D),* les systèmes d'articulation centrale et terminale correspondants ayant des axes de rotation mutuellement parallèles perpendiculaires audit plan, le bras central n'étant fixé en aucun point au support et étant ainsi libre de se déplacer par rapport à celui-ci, et dans lequel le support ($\overline{AD}$) de la liaison parallèle de Watt est soumis à un déplacement $x_f(t)$ dans un système de référence inertiel ($x_i y_i z_i$), le déplacement $x_f(t)$ ayant une composante non nulle dans la direction *(x)* perpendiculaire aux axes de rotation des systèmes d'articulation terminale (*A, D*) dans le système de référence spatiale tridimensionnel ;
N. relier un transducteur mécanique (ELM) audit bras central ($\overline{BC}$) de manière à être adapté pour transférer une force appliquée au bras central dans le fluide sous forme d'une variation de pression dans une direction ayant une composante non nulle dans la direction (*x*) perpendiculaires aux axes de rotation des systèmes d'articulation terminale (*A, D*) dans le système de référence spatiale tridimensionnelle ;
fournir un système de détection de déplacement du support ($\overline{AD}$) dans le système de référence inertiel *(xiyizi)* ou en plaçant le support ($\overline{AD}$) sur un superatténuateur ;
P. doter la liaison parallèle de Watt d'un système permettant de mettre en œuvre une force pour déplacer le bras central ($\overline{BC}$), de préférence en son centre géométrique *E*, par rapport au support ($\overline{AD}$) *;*
Q. mesurer, si le superatténuateur n'est pas présent, le déplacement du support ($\overline{AD}$) au moyen du système de détection de déplacement du support ($\overline{AD}$) à l'étape O ;
R. appliquer la force audit bras central par l'intermédiaire du système d'actionnement à l'étape P :

$$F_c^{ext}(s) = F_{gen}(s) + F_{c_g}(s)$$

où $F_{gen}(s)$ est la force nécessaire pour générer un signal de pression $\Delta p_{gen}(s)$ et $F_{c_g}(s)$ est la force nécessaire pour compenser les effets du déplacement de la masse d'essai dû au déplacement du support ($\overline{AD}$).

**20.** Procédé selon la revendication 19, dans lequel le système de détection de déplacement de support ($\overline{AD}$) à l'étape O consiste en ou comprend une autre liaison parallèle de Watt (PW, PRW, PMW).

Fig. 2
(PRIOR ART)

Fig. 1
(PRIOR ART)

Fig. 3
(PRIOR ART)

$$F_c(t) = S \cdot (p_1(t) - p_2(t))$$

Fig. 6

EP 4 357 738 B1

Fig. 4
(PRIOR ART)

Fig. 5

Fig. 7

Fig. 8

(a)

(b)

Fig. 9

EP 4 357 738 B1

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2643711 B1
- EP 22175640
- WO 2011004413 A3
- IT 1394612
- EP 2452169 A
- JP 5409912 B
- RU 2518587
- AU 2010269796
- US 8950263 B
- CA 2763204
- WO 2012147112 A
- IT 1405600
- EP 2643711 A

- AU 201247104
- JP 5981530 B
- RU 2589944
- US 9256000 B
- CA 2825565
- WO 2016020947 A
- IT 1425605
- EP 3177888 A
- JP 6664378 B
- US 10345104 B
- US 2014036637 A1, F. Barone
- WO 2021051951 A1, H. Ma
- US 4387451 A, H.A. Wilcox

**Non-patent literature cited in the description**

- **F. BARONE ; G. GIORDANO**. The UNISA Folded Pendulum: A very versatile class of low frequency high-sensitive sensors. *Measurement*, 2017
- **F. BARONE ; G. GIORDANO**. A new typology of DC tiltmeter based on the Watt's linkage architecture. *Sensors and Actuators A*, 2018, vol. 281, 264277
- Mechanical Monolithic Inertial Sensors for Historical and Archeological Heritage Real-Time Broadband Monitoring. **F. BARONE ; G. GIORDANO**. Handbook of Cultural Heritage Analysis. Springer, 2022
- **F. TRAVASSO ; F. BARONE ; G. GIORDANO ; F. MARCHESONI ; H. VOCCA**. Low temperature performances of a monolithic folded pendulum sensor for the third generation of interferometric detectors of gravitational waves. *The international GRAvitational-wave Science & technology Symposium (GRASS 2018)*, 2018, https://agenda.infn.it/event/14869/contributions/26928
- **S. A. ZAWAWI ; A. A. HAMZAH ; B. Y. MAJLIS ; F. MOHD-YASIN**. A Review of MEMS Capacitive Microphones. *Micromachines*, 2020, vol. 11, 484
- **F. REULEAUX**. The Kinematics of Machinery. MacMillan and Co.
- **E.S. FERGUSON**. Kinematics of Mechanisms from the Time of Watt. *United States National Museum Bulletin*, 1962, vol. 228, 185230

- **A. BERTOLINI ; R. DESALVO ; F. FIDECARO ; A. TAKAMORI**. Monolithic folded pendulum accelerometers for seismic monitoring and active isolation systems. *IEEE Trans. Geosci. Remote Sens*, 2006, vol. 44, 273-276, http://dx.doi.org/10.1109/TGRS.2005.861006
- **A. BERTOLINI ; R. DESALVO ; F. FIDECARO ; M. FRANCESCONI ; S. MARKA ; V. SANNIBALE ; D. SIMONETTI ; A. TAKAMORI ; H. TARIQ**. Mechanical design of a single-axis monolithic accelerometer for advanced seismic attenuation systems. *Nucl. Instrum. Methods A*, 2006, vol. 556, 616-623, http://dx.doi.org/10.1016/j.nima.2005.10.117
- **F. ACERNESE ; G. GIORDANO ; R. ROMANO ; R. DE ROSA ; F. BARONE**. Tunable mechanical monolithic sensor with interferometric readout for low frequency seismic noise measurement. *Nucl. Instrum. Methods A*, 2010, vol. 617, 457-458, http://dx.doi.org/10.1016/j.nima.2009.10.112
- **F. BARONE ; G. GIORDANO ; F. ACERNESE ; R. ROMANO**. Watt's linkage based large band low frequency sensors for scientific applications. *Nucl. Instrum. Methods A*, 2015, http://dx.doi.org/10.1016/j.nima.2015.11.015
- **M. PINOLI ; D.G. BLAIR ; L. JU**. Test on a low frequency inverted pendulum system. *Meas. Sci. Technol.*, 1993, vol. 64, 995-999
- **D.G. BLAIR ; J. LIU ; E.F. MOGHADDAM ; L. JU**. Performance of an ultra-low-frequency folded pendulum. *Phys. Lett. A*, 1994, vol. 193, 223-226

- **J.F. LIU** ; **L. JU** ; **D.G. BLAIR**. Vibration isolation performance of an ultra-low frequency folded pendulum resonator. *Phys. Lett. A*, 1997, vol. 228, 243-249, http://dx.doi.org/10.1016/S0375-9601(97)00105-9

- **A. TAKAMORI** ; **A. BERTOLINI** ; **R. DESALVO** ; **A. ARAYA** ; **T. KANAZAWA** ; **M. SHINOHARA**. Novel compact tiltmeter for ocean bottom and other frontier observations. *Meas. Sci. Technol.*, 2011, vol. 22, 1115901, http://dx.doi.org/10.1088/0957-0233/22/11/115901

- **JIANGFENG LIU et al.** Near-shore ocean wave measurement using a very low frequency folded pendulum. *Measurement Science And Technology*, 01 October 1998, vol. 9 (10), 1772-1776